(19) Europäisches Patentamt
European Patent Office
Office européen des brevets

(11) EP 4 209 534 A1

(12) **EUROPEAN PATENT APPLICATION**
published in accordance with Art. 153(4) EPC

(43) Date of publication:
**12.07.2023 Bulletin 2023/28**

(21) Application number: **21864380.7**

(22) Date of filing: **01.09.2021**

(51) International Patent Classification (IPC):
***C08G 67/00*** *(2006.01)*

(52) Cooperative Patent Classification (CPC):
**C08G 67/00**

(86) International application number:
**PCT/JP2021/032186**

(87) International publication number:
**WO 2022/050323 (10.03.2022 Gazette 2022/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.09.2020 JP 2020147757**

(71) Applicant: **Asahi Kasei Kabushiki Kaisha**
**Tokyo 1000006 (JP)**

(72) Inventors:
- **ISHIHARA Michihiro**
  **Tokyo 100-0006 (JP)**
- **MIZOMOTO Hitoshi**
  **Tokyo 100-0006 (JP)**

(74) Representative: **D Young & Co LLP**
**120 Holborn**
**London EC1N 2DY (GB)**

(54) **POLYARYLENE ETHER KETONE RESIN**

(57) An object of the present disclosure is to provide a PAEK resin which has significantly low contents of metal elements, phosphorus, chlorine, bromine, and the like that are unneeded in the original components of the resin and is excellent in metal adhesion and a molded product containing such a PAEK resin. A polyarylene ether ketone resin of the present disclosure satisfies the following (A) to (D): (A) the residual amount of each element classified into Period 2 to Period 6 among the Group 3 to Group 13 elements in the periodic table excluding Tc (technetium) and Pm (promethium) of which no stable isotopes exist is 100 ppm or less; (B) the residual amount of each of Cl and Br elements is 100 ppm or less; (C) the residual amount of P is 100 ppm or less; and (D) the repeating unit (1-1) represented by the following general formula (1-1) is included, and a repeating unit (2-1) represented by the following general formula (2-1) may be further included. The molar ratio of ketone groups in all repeating units included in the resin and the molar ratio of ether groups in the all repeating units, to the total carbon number in the all repeating units, are 9.5% by mol or more and 4.5% by mol or more, respectively.

EP 4 209 534 A1

## Description

TECHNICAL FIELD

The present disclosure relates to a polyarylene ether ketone resin, a production method of the same, and a molded product containing a polyarylene ether ketone resin.

BACKGROUND

Polyarylene ether ketone resins (hereinafter referred to as PAEK resins) are super engineering plastics that are excellent in heat resistance and toughness, and can be used continuously in high-temperature environments. They have had a wide range of applications, including medical parts and fibers, as well as transportation apparatuses such as automobile parts and members for aircrafts. In particular, their excellent chemical resistance makes them suited for use in the semiconductor field in which a number of cleaning steps are required, and their excellent self-extinguishing characteristic and flame resistance (equivalent to V-0) in the neat resin state make them widely used in applications of electrical and electronic materials.

It has been known that conventional methods of producing PAEK resins are broadly classified into: (a) polymerization through an aromatic nucleophilic substitution reaction, and (b) polymerization through an aromatic electrophilic substitution reaction.

When (a) is used, a polyetheretherketone resin (hereinafter sometimes abbreviated as PEEK resin) is produced through an aromatic nucleophilic substitution type polycondensation reaction in which potassium carbonate is caused to act on two monomers, i.e., 4,4'-difluorobenzophenone and hydroquinone in diphenylsulfone, for example (PTL 1).

When (b) is used, a polyetherketoneketone resin (hereinafter sometimes abbreviated as PEKK resin) is produced through an aromatic electrophilic substitution type polycondensation reaction in which two monomers, i.e., terephthalic acid dichloride and diphenyl ether are used and an inorganic Lewis acid is caused to act, for example (PTL 2).

In view of the production cost, when (a) is used, the raw material cost is increased because 4,4'-difluorobenzophenone which is expensive is used as a monomer and the production cost is increased because a reaction temperature of 300 °C or higher is required. As a result, the price of the resin tends to be increased. When (b) is used, typical conditions are such that terephthalic acid dichloride derived and activated from terephthalic acid and a solid inorganic Lewis acid such as aluminum chloride anhydrous or iron chloride are generally used in excessive amounts. This is advantageous in that the raw material cost is relatively low and the price of the resin accordingly can be kept low. There is, however, a problem of difficulty of removal of the catalyst used in excess (PTL 3).

The following methods of producing PAEK resins are known, for example.

PTL 3 discloses production of an aromatic PAEK resin through a Friedel-Crafts reaction using $AlCl_3$ as a catalyst, and discusses that removal of aluminum in the resultant polymer is difficult because it is strongly complexed with carbonyl groups in the backbone. To address this issue, Maresca et al. have attempted to produce a PAEK resin by causing aluminum chloride anhydrous to act in 1,2-dichloroethane using terephthalic acid chloride, isophthalic acid chloride, and diphenyl ether as monomers, and then washing the resultant resin with an acetone solution of 2,4-pentanedione. However, this removes only one tenth of the residual aluminum content.

Similarly, PTL 4 discusses that, during production of a PAEK resin using aluminum chloride anhydrous as a catalyst, aluminum remains in the resultant polymer, and discloses the possibility that residual aluminum may be involved in decomposition and discoloration of the polymerized product. Brugel et al. disclose polymerization of terephthalic acid chloride, isophthalic acid chloride, 1,3,5-benzene tricarboxylic acid chloride, and diphenyl ether as monomers for obtaining a PAEK resin by causing aluminum chloride anhydrous to act in dichlorobenzene, and washing the resultant polymer with methanol and formic acid, and disclose that 4,000 ppm of residual aluminum was detected. This indicates that about 4,000 ppm of aluminum element at maximum may remain during production of a PAEK resin using aluminum chloride as a typical catalyst, and that removal of such an element is an extremely important issue for prevention of decomposition and discoloration of that resin. The literature also discloses that the amount of residual aluminum can be reduced to one tenth by heat-treatment of a dried PAEK resin in a hydroxy acid such as lactic acid, which, however, leads to an increase in the raw material cost and an increase in the price of the resin, as in PTL 3.

In the meantime, methods of producing a PAEK resin through condensation of an aromatic dicarboxylic acid and an arene in a mixture of an organosulfonic acid and diphosphorus pentaoxide have been devised. There is, however, a problem that not only relatively high temperature reaction conditions are required, but the excess of diphosphorus pentaoxide used and hydrolysis residues thereof cannot be sufficiently removed from the polymerized PAEK resin and a large amount of the residual elements remain and cannot be removed even with purification, as with other aromatic electrophilic substitution type polycondensations.

PTL 5 discloses a polymerization method of a PAEK resin by causing diphosphorus pentaoxide to act in methanesulfonic acid using isophthalic acid and diphenyl ether as monomers. Diphosphorus pentaoxide acts as a

dehydrating agent because it is hydrolyzed by water which is a product of polycondensation to give phosphoric acid, but use of diphosphorus pentaoxide presents the following issues.

1. It has a high reactivity to water, making handling thereof difficult.
2. Phosphoric acid produced by hydrolysis thereof is generally difficult to regenerate through collection and dehydration, and is extracted by hydrolysis treatment when polymerization of the PAEK resin is terminated and treatment of wastewater is carried out.
3. Recycling thereof is difficult, resulting in an increase in the costs of production and raw materials.
4. Hydrolysis products such as phosphoric acid remain in the polymer, and the residual elements cannot be reduced even when purification by a known method is carried out.

NPL 1 reports study results demonstrating that phosphoric acid and phosphoric acid salt induce risks of hypocalcemia and osteoporosis. Therefore, when PAEK resins are used in medical applications, for example, it is desirable that phosphorous compounds derived from phosphoric acid and phosphoric acid salts are not included. As mentioned above, however, the issue of removal of phosphoric acid remains as a problem relevant to use of diphosphorus pentaoxide during production.
NPL 2 discusses that phosphorus, phosphoric acid, and phosphoric acid salts are the cause of eutrophication in rivers, lakes, oceans and bays, and the technique for removal of phosphorus in these forms has attracted attention for protection of water qualities in sewage treatment and industrial wastewater treatment. Coagulation sedimentation methods that use salts of metals such as Al, Fe, and Ca as a coagulating agent have been established as technique for removal of phosphorus, but these techniques generate coagulated sludge as wastes. Therefore, it is desirable that no phosphorous compounds derived from phosphoric acid and phosphoric acid salts are produced in production of PAEK resins. As mentioned above, however, when diphosphorus pentaoxide is used in production, phosphoric acid and phosphate ions ($PO_4^{3-}$) are by-produced, and the treatment of industrial wastewater containing these at high concentrations remains as an economical challenge.
NPL 3 discloses removal of Cl and Br as a challenge facing material recycling of resins. These residual Cl and Br can lower the quality during recycling, and gaseous components resulting from residual Cl and Br are generated during thermal decomposition in thermal recycling or chemical recycling processes, causing corrosion of instruments and piping. Therefore, it is desirable that residual Cl, Br, and the like are not generated during production of PAEK resins. However, when PAEK resins are produced using a chloride or a bromide such as aluminum chloride or aluminum bromide as a catalyst during production, elements such as Cl and Br can remain in these PAEK resins, which remains as a latent issue.
NPL 4 discusses that one of the problems in material recycling of resins is possible accumulation of residues of metal catalysts used for production of the resins. In a material recycling process, not only the thermal history given to a virgin resin during the thermal processing process, but also a processing step that requires further heating may cause a significant reduction in performances as compared to the virgin resin material, which is caused by the combined factors of residual metal catalysts described above, together with oxidative degradation of the resin. Therefore, absence of metal residues is desirable for production of PAEK resins. However, when PAEK resins are produced using a metal chloride or the like in the amount higher than the stoichiometric amount during production, the problem of residual metal elements in these PAEK resins still remains.
In light of the recent social situations, for increasing the value of highly efficient recycling of used resins and recycled raw materials as part of efforts to establish a recycling-oriented economy, there still remain the challenges in development of resin materials that are free of metal elements, Cl, Br, and the like, and production methods thereof.

CITATION LIST

Patent Literature

PTL 1: JP S54-090296 A
PTL 2: US 3065205 A
PTL 3: US 4611033 A
PTL 4: JP H3-505751 A
PTL 5: JP S59-135224 A

Non-patent Literature

NPL 1: The Journal of Toxicological Sciences (published in Japan), 2015, Vol. 40, No. 1, 55-69.
NPL 2: JOURNAL of ENVIRONMENTAL CONSERVATION ENGINEERING, 1982, Vol. 11, No. 11, 44-51.
NPL 3: Material cycles and waste management research, 2018, Vol. 29, No. 2, 152-162.
NPL 4: JOURNAL OF THE SOCIETY OF RUBBER SCIENCE AND TECHNOLOGY, JAPAN, 2014, Vol. 87, No. 11, 441-446.

SUMMARY

(Technical Problem)

When a PAEK resin is produced through a conventional aromatic electrophilic substitution type polycondensation reaction by the action of an inorganic Lewis acid as described above, a large amount of inorganic salts containing chlorine, aluminum, iron, and the like are produced as by-products from the monomers and the Lewis acid that is used in excess. These by-products cannot be removed by purification after production of the resin. In order to address to the recent social situations that require reduction in environmental loads, reduction in wastes and metal elements, chlorine, and the like, which remain in products such as resin compositions, etc. and hinder recycling, are an issue to be solved.
For example, it is generally known that toxic gases are generated when a resin combusts. Use of certain hazardous substances in electronic and electrical devices has been restricted mainly in the EU, and halogenated flame retardants are regulated under the RoHS Directive. The Japan Electronics Packaging and Circuits Association (JPCA) and the Institute of Printed Circuits, Institute for Interconnecting and Packaging Electronic Circuits (IPC) of the United States have regulated chlorine and bromine compounds in electronic materials, and restrict the residue to be 900 ppm for chlorine, 900 ppm for bromine, and 1500 ppm for chlorine and bromine combined. In light of the increasing legal restrictions on residual elements in industrial materials, development of PAEK resins which can reduce the contents of residual elements is an issue.
An object of the present disclosure is to provide a PAEK resin which has significantly low contents of metal elements, phosphorus, chlorine, bromine, and the like that are unneeded in the original components of the resin and is excellent in metal adhesion, and a molded product containing such a PAEK resin. Another object of the present disclosure is to provide a production method suitable for production of such a PAEK resin.
The PAEK resin of the present embodiment is preferably a PAEK resin which is excellent in heat resistance, can maintain a high glass transition temperature and melting point, enables control on the crystallinity and the melting point, and has a good molding processability.

(Solution to Problem)

The majority of PAEK resins produced through aromatic electrophilic substitution type polycondensation reactions rely on polymerization reactions based on the Friedel-Crafts reaction using an active carboxylic acid derivative such as an acid chloride and aluminum chloride described above. However, PAEK resins produced by conventional methods contain unneeded elements, and such unneeded elements cannot be removed by purification after production. Therefore, a PAEK resin is required to be produced in a form that contains as minimum unneeded elements as possible in the original components of a PAEK resin. It is important to design a reaction in which the catalysts and solvents containing as minimum unneeded elements as possible are used at the production stage of monomers required for the polymerization method of each PAEK resin and at the polymerization reaction stage using those monomers. However, provision of high-quality PAEK resins with industrially significant molecular weights has not been achieved yet because this requires researches on substantially new production conditions in terms of the reactivity of monomers and the solubility of the polymer during polymerization. In addition, it is an extremely important industrial issue to ensure that a high-quality PAEK resin produced in this way achieves good processability in actual molding processes while maintaining the high heat resistance equivalent to conventional products.
As a result of intensive research, the present inventors have discovered that a PEAK resin excellent in metal adhesion can be obtained by setting the molar ratio of ketone groups and the molar ratio of ether groups in a polyarylene ether ketone resin to certain values or more and by significantly reducing the ratio of residual elements.
The present inventors have also discovered that a PAEK resin produced through copolymerization of rigid repeating units (1-1) and flexible repeating units (2-1) as follows enables control on the degree of crystallinity and the melting point and provides a good molding processability when the ratio of the repeating units (1-1) and the repeating units (2-1) is appropriately adjusted.

Specifically, the present disclosure is as follows.

[1] A polyarylene ether ketone resin,

wherein the following (A) to (D) are satisfied:

(A) a residual amount of each element classified into Period 2 to Period 6 among the Group 3 to Group 13 elements in the periodic table excluding Tc (technetium) and Pm (promethium) of which no stable isotopes exist is 100 ppm or less;
(B) a residual amount of each of Cl and Br elements is 100 ppm or less;
(C) a residual amount of P is 100 ppm or less; and
(D) a repeating unit (1-1) represented by the following general formula (1-1) is included, and a repeating unit (2-1) represented by the following general formula (2-1) may be further included, and

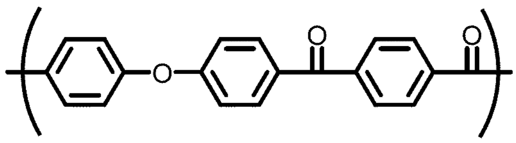
(1-1)

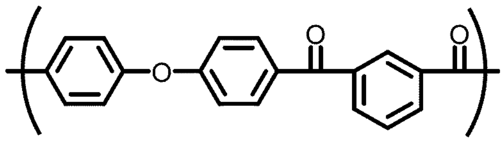
(2-1)

a molar ratio of ketone groups in all repeating units included in the resin and a molar ratio of ether groups in the all repeating units, to a total carbon number in the all repeating units, are 9.5% by mol or more and 4.5% by mol or more, respectively.

[2] A polyarylene ether ketone resin,

wherein the following (A), (B), (C'), and (D) are satisfied:

(A) a residual amount of each element classified into Period 2 to Period 6 among the Group 3 to Group 13 elements in the periodic table excluding Tc (technetium) and Pm (promethium) of which no stable isotopes exist is 100 ppm or less;
(B) a residual amount of each of Cl and Br elements is 100 ppm or less;
(C') a residual amount of phosphate ion ($PO_4^{3-}$) is 100 ppm or less; and
(D) a repeating unit (1-1) represented by the following general formula (1-1) is included, and a repeating unit (2-1) represented by the following general formula (2-1) may be further included, and

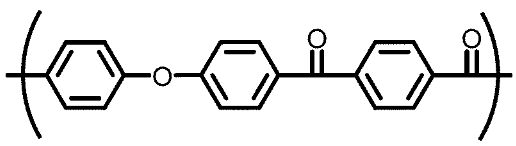
(1-1)

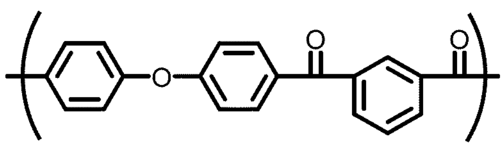
(2-1)

a molar ratio of ketone groups in all repeating units included in the resin and a molar ratio of ether groups in the all repeating units, to a total carbon number in the all repeating units, are 9.5% by mol or more and 4.5% by mol or more, respectively.

[3] The polyarylene ether ketone resin according to [1] or [2], wherein a ratio of the repeating unit (1-1) to the repeating unit (2-1) (repeating unit (1-1) : repeating unit (2-1)) is in a range of 100:0 to 50:50 in terms of molar ratio, and a GPC-based number average molecular weight Mn is 4,000 or more.
[4] The polyarylene ether ketone resin according to any one of [1] to [3], wherein a glass transition temperature is 145 °C or higher and a melting point is 300 °C or higher.
[5] A method of producing the polyarylene ether ketone resin according to any one of [1] to [4], the method comprising: causing a reaction of monomer components that comprise a monomer (1-2) represented by the following formula (1-2) and a monomer (3-1) represented by the following formula (3-1) and may further comprise a monomer (2-2) represented by the following formula (2-2), in the presence of a fluorine atom-containing sulfonic acid represented by the following general formula (4-1), and a fluorine atom-containing acetic anhydride represented by the following general formula (5-1) or a fluorine atom-containing sulfonic anhydride represented by the following general formula (6-1):

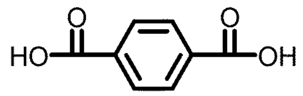
(1-2)

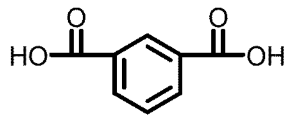
(2-2)

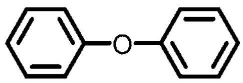
(3-1)

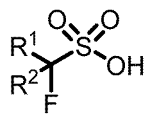
(4-1)

(in the formula, $R^1$ and $R^2$ can be the same or different from each other, and are a hydrogen atom, a fluorine atom, a trifluoromethyl group, a pentafluoroethyl group, or an alkyl group having a carbon number of 1 to 8),

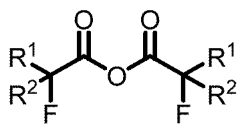
(5-1)

(in the formula, $R^1$ and $R^2$ can be the same or different from each other, and are a hydrogen atom, a fluorine atom, a trifluoromethyl group, a pentafluoroethyl group, or an alkyl group having a carbon number of 1 to 8),

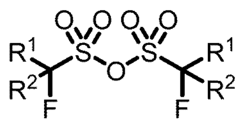
(6-1)

(in the formula, $R^1$ and $R^2$ can be the same or different from each other, and are a hydrogen atom, a fluorine atom, a trifluoromethyl group, a pentafluoroethyl group, or an alkyl group having a carbon number of 1 to 8).

[6] A composition comprising the polyarylene ether ketone resin according to any one of [1] to [5]
[7] A molded product comprising the polyarylene ether ketone resin according to any one of [1] to [6].

(Advantageous Effect)

The present disclosure can provide a PAEK resin excellent in metal adhesion, containing metal elements, phosphorus, chlorine, bromine, and the like that are unneeded in the original components of the resin in significantly low contents, or containing metal elements and residual phosphate ions ($PO_4^{3-}$) in low contents, and a molded product containing the same.

The PAEK resin of the present embodiment preferably has an excellent heat resistance and a high glass transition temperature, and enables control on the melting point while retaining a high crystallinity, similarly to conventional PAEK resins. In addition, it preferably has good moldability.

DETAILED DESCRIPTION

The following provides a detailed description of an embodiment of the present disclosure (hereinafter, referred to as the "present embodiment"). The present embodiment described below is merely an example for describing the present disclosure and is not intended to limit the present disclosure to the following contents. The present disclosure can be implemented with appropriate modifications that do not deviate from the essence thereof.

(Polyarylene ether ketone resin (PAEK resin))

In a PAEK resin of a present embodiment, the molar ratio of ketone groups in all repeating units included in the resin and the molar ratio of ether groups in the all repeating units, to the total carbon number in the all repeating units, are 9.5% by mol or more and 4.5% by mol or more, respectively. The polyarylene ether ketone resin of the present embodiment satisfies the following (A), (B), (C), and (D), or (A), (B), (C'), and (D):

(A) the residual amount of each element classified into Period 2 to Period 6 among the Group 3 to Group 13 elements in the periodic table excluding Tc (technetium) and Pm (promethium) of which no stable isotopes exist is 100 ppm or less;
(B) the residual amount of each of Cl and Br elements is 100 ppm or less;
(C) the residual amount of P is 100 ppm or less;
(C') the residual amount of phosphate ion ($PO_4^{3-}$) is 100 ppm or less; and
(D) a repeating unit (1-1) represented by the general formula (1-1) is included, and a repeating unit (2-1) represented by the general formula (2-1) may be further included.

When the number of ketone groups and the number of ether groups in the all repeating units in the resin satisfy the above ranges and the above conditions are satisfied, a good metal adhesion is imparted to the PAEK resin of the present embodiment.

The PAEK resin of the present embodiment preferably has a repeating unit (1-1) represented by the general formula (1-1), and may also have a repeating unit (2-1) represented by the general formula (2-1). The PAEK resin of the present embodiment is more preferably a resin consisting only of the repeating unit (1-1), or consisting only of the repeating unit (1-1) and the repeating unit (2-1).

The PAEK resin of the present embodiment preferably has a structure having end groups E selected from the group consisting of the following general formulae (7-1), (7-2), (7-3), and (7-4), to a structure including the repeating unit (1-1) or a structure including a combination of the repeating unit (1-1) and the repeating unit (2-1) (preferably, a structure consisting only of the repeating unit (1-1) or a structure consisting only of the repeating unit (1-1) and the repeating unit (2-1)):

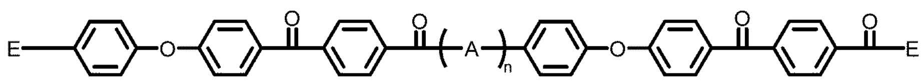

(7-1)

(in the formula, A can be a structure including (1-1) or a structure including a combination of (1-1) and (2-1), and n is an integer of 1 or more)

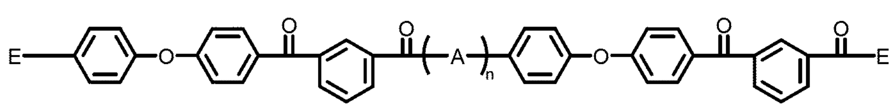

(7-2)

(in the formula, A can be a structure including (1-1) or a structure including a combination of (1-1) and (2-1), and n is an integer of 1 or more)

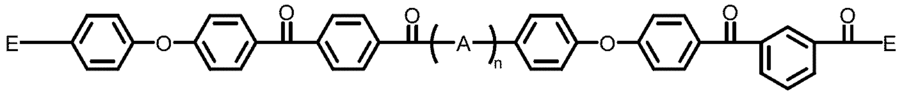

(7-3)

(in the formula, A can be a structure including (1-1) or a structure including a combination of (1-1) and (2-1), and n is an integer of 1 or more)

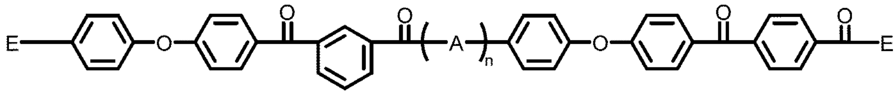

(7-4)

(in the formula, A can be a structure including (1-1) or a structure including a combination of (1-1) and (2-1), and n is an integer of 1 or more).

The left and right E in formulas (7-1), (7-2), (7-3), and (7-4) can be the same or different from each other, and each E may be selected as a monovalent substituent, for example, may be selected from the following general formula (7-5) and the following general formula (7-6), but the suitability of each depends on the application in which the PAEK resin of the present embodiment is used, and the selections are not limited to this example. For example, in general, when the thermal stability of the PAEK resin of the present embodiment and the reactivity by gas generation upon heating and any thermal reaction which may cause a structural change inside the repeating units are taken into consideration, E is preferably a substituent wherein $R^3$ is selected from atoms or atomic groups free of carboxylic acid (-COOH) in the general formula (7-5) and the general formula (7-6), and more preferably selected from atoms or atomic groups wherein $R^3$ is free of a carboxylic acid (-COOH) or a sulfonic acid ($-S(O_2)OH$) in the general formula (7-5). Or, when use of the PAEK resin of the present embodiment in combination with other resins or materials via covalent bonding or single or any combination of intermolecular interactions is taken into consideration, E is preferably selected from atoms or atomic groups wherein $R^3$ includes carboxylic acid (-COOH) or sulfonic acid ($-S(O_2)OH$) in the general formula (7-5).

The substitution position of $R^3$ can be any combination, and is more preferably a combination having $C_2$ symmetry when a rotation around the single bond between the carbonyl carbon and the aromatic ring carbon in the general formula (7-5) is taken into consideration. The substitution positions of $R^4$ and $R^5$ may be any combination, and are more preferably a combination having $C_2$ symmetry when a rotation around the single bond between the aromatic ring carbon and X in the general formula (7-6) is taken into consideration.

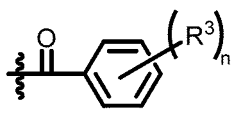

(7-5)

(in the formula, n is an integer of 0 to 5, and $R^3$ can be the same or different from each other, and are a hydrogen atom, a carboxylic acid derivative ($-COOR^4$), a sulfone derivative ($-S(O)_2R^4$), a sulfonic acid derivative ($-S(O_2)OR^4$), and an alkyl or substituted aryl group selected from an atomic group having a part or all of carbon, oxygen, sulfur, nitrogen, and hydrogen as constituent elements, having a carbon number of 1 to 20, and free of protonic substituent. Protic functional groups as used herein refer to hydroxyl groups, aldehyde groups (-CHO), carboxylic acids (-COOH), and primary or secondary amines, for example. $R^4$ is a monovalent substituent, and is a hydrogen atom or an alkyl or substituted aryl group selected from an atomic group having a part or all of carbon, oxygen, sulfur, nitrogen, and hydrogen as constituent elements, having a carbon number of 1 to 20, and free of protonic substituent.)

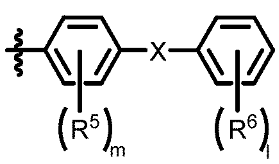

(7-6)

(in the formula, m is an integer of 0 to 4, 1 is an integer of 0 to 5, X is an oxygen atom, a sulfur atom, $CH_2$, or 1,4-dioxylbenzene, $R^5$ and $R^6$ can be the same or different from each other, and are a hydrogen atom, a carboxylic acid derivative (-$COOR^4$), a sulfone derivative (-$S(O)_2R^4$), a sulfonic acid derivative (-$S(O_2)OR^4$), and an alkyl or substituted aryl group selected from an atomic group having a part or all of carbon, oxygen, sulfur, nitrogen, and hydrogen as constituent elements, having a carbon number of 1 to 20, and free of protonic substituent. Protic functional groups as used herein refer to hydroxyl groups, aldehyde groups (-CHO), carboxylic acids (-COOH), and primary or secondary amines, for example. $R^4$ is a monovalent substituent, and is a hydrogen atom or an alkyl or substituted aryl group selected from an atomic group having a part or all of carbon, oxygen, sulfur, nitrogen, and hydrogen as constituent elements, having a carbon number of 1 to 20, and free of protonic substituent.)

The PAEK resin of the present embodiment may include repeating units other than repeating unit (1-1) and the repeating unit (2-1).

The PAEK resin of the present embodiment may contain residual elements that remain in the resin after production.

The ratio of the residual mass of aluminum element per 100% by mass of the PAEK resin of the present embodiment is 100 ppm or less, preferably 90 ppm or less, more preferably 80 ppm or less. When the ratio of the residual mass is within the above range, decomposition and discoloration of the polymerized product can be prevented. This is suited for medical applications, for example.

The ratio of the residual mass of each element classified into Period 2 to Period 6 among the Group 3 to Group 13 elements in the periodic table excluding Tc (technetium) and Pm (promethium) of which no stable isotopes exist, per 100% by mass of the PAEK resin of the present embodiment is 100 ppm or less, preferably 90 ppm or less, and more preferably 80 ppm or less. When the ratio of the residual mass is within the above range, decomposition and discoloration of the polymerized product can be prevented. This is suited for medical applications, for example.

The ratio of each residual mass of Cl and Br per 100% by mass of the PAEK resin of the present embodiment is 100 ppm or less. In this case, gas components generated when the resin is heated to a temperature equal to or higher than the melting point can be reduced. It is preferably 50 ppm or less, and more preferably 20 ppm or less. When the ratio of the residual mass is within the above range, generation of gas components generated upon heating can be further suppressed and discoloration of the PAEK resin and corrosion of other components used in combination caused by the generated gases components can be suppressed. The PAEK resin of the present embodiment is suited for electrical and electronic component applications, for example.

The ratio of the residual mass of F per 100% by mass of the PAEK resin of the present embodiment is preferably 2000 ppm or less, and more preferably 1400 ppm or less. When the ratio of the residual mass is within the above range, gas components generated when the resin is heated to a temperature equal to or higher than the melting point can be reduced. It is even more preferably 1000 ppm or less. When the ratio of the residual mass is within the above range, generation of gas components generated upon heating can be further suppressed and discoloration of the PAEK resin can be suppressed. Particularly, it is preferably 500 ppm or less. When the ratio of the residual mass is within the above range, corrosion of other components used in combination caused by the generated gas components can be suppressed. This ratio of the residual mass of F can be reduced in the purification step during the resin production process, and can be reduced to 20 ppm or less, and generation of the aforementioned gas components and corrosion can be suppressed to equivalent levels or less. The PAEK resin of the present embodiment is further suited for electrical and electronic component applications and medical applications, for example.

The ratio of the residual mass of P per 100 % by mass of the PAEK resin of the present embodiment is preferably 100 ppm or less, more preferably 90 ppm or less, and even more preferably 80 ppm or less. When the ratio of the residual mass is within the above range, occurrence of discoloration and gaseous components generated upon heating can be suppressed. This is suited for medical applications, for example.

The ratio of the residual mass of phosphate ion ($PO_4^{3-}$) per 100% by mass of the PAEK resin of the present embodiment is preferably 100 ppm or less, more preferably 90 ppm or less, and even more preferably 80 ppm or less. When the ratio of the residual mass is within the above range, occurrence of discoloration and gaseous components generated upon heating can be suppressed. This is suited for medical applications, for example.

Appropriate selection of the ratio (e.g., molar ratio) of the rigid repeating unit (1-1) to the flexible repeating unit (2-1) enables the melting point (Tm) of the PAEK resin of the present embodiment to be adjusted while retaining a high degree of crystallinity, thereby imparting a good molding processability.

The ratio of the repeating unit (1-1) to the repeating unit (2-1) (repeating unit (1-1) : repeating unit (2-1)) is preferably in the range of 100:0 to 50:50, more preferably in the range of 100:0 to 52:48, and particularly preferably in the range of 100:0 to 55:45, in terms of molar ratio. By increasing the ratio of the molar amount of the repeating unit (1-1) to the molar amount of the repeating unit (2-1) within the above molar ratio range, the glass transition temperature (Tg), the degree of crystallinity, and the melting point (Tm) can be increased and a PAEK resin excellent in the heat resistance can be obtained. In contrast, by reducing the ratio of the molar amount of the repeating unit (1-1) to the molar

amount of the repeating unit (2-1) within the above molar ratio range, the melting point (Tm) can be adjusted to a relatively low temperature and a PAEK resin excellent in molding processability can be obtained.

By appropriately optimizing the ratio of the repeating unit (1-1) to the repeating unit (2-1) and by appropriately adjusting the degree of polymerization to obtain an optimal number average molecular weight Mn for the PAEK resin of the present embodiment, a PAEK resin excellent in heat resistance, molding processability, and strength of a molded product can be obtained.

The number average molecular weight Mn of the PAEK resin of the present embodiment is preferably 4,000 or more, more preferably 4,000 to 30,000, even more preferably 4,000 to 25,000, even more preferably 4,000 to 20,000, and particularly preferably 4,500 to 15,000. The above number average molecular weight Mn is preferably 8,000 or more.

When the average molecular weight is the above upper limit or less, an excellent moldability is achieved. Furthermore, when it is the above lower limit or above, a molded product with an excellent strength can be produced.

Note that the number average molecular weight can be measured by using the method described in the Examples section below.

The ratio of low molecular weight components in the PAEK resin is preferably 10% or less, more preferably 8% or less, even more preferably 6%, and particularly preferably 5% or less. This ratio is calculated from the value of the area in the ratio range of peaks in which M relative to the value of the entire peak area is less than 3.1, among peaks in a differential molecular weight distribution curve (having the two axes, i.e., dw/d (log M) and log M).

When the ratio of the above low molecular weight components is the above upper limit or less, occurrence of discoloration and gas components generated upon heating can be suppressed. If the ratio is this upper limit or more, generation of gases caused by thermal decomposition of the low molecular weight components, chemical conversion of the low molecular weight components at high temperatures and their contribution to degradation of the PAEK resin may cause discoloration, irreversible chemical conversion, and the like, which may lead to increased viscosity during melt processing and reduced molding processability, for example. In contrast, when the ratio of the low molecular weight components is the above upper limit or less, a molded product excellent in strength can be produced.

Note that a differential molecular weight distribution curve can be obtained by the GPC molecular weight distribution measurement method to be described below.

The intrinsic viscosity of the PAEK resin determined by a measurement according to ASTM D2857 at a test temperature of 30 °C using a test solution containing a 0.5 mass/volume% solution of the polymer in concentrated $H_2SO_4$ is preferably 0.5 to 3.0, more preferably 0.5 to 2.8, and particularly preferably from 0.6 to 2.7. When the intrinsic viscosity is the above upper limit or less, an excellent molding processability is achieved.

The glass transition temperature of the PAEK resin of the present disclosure is preferably 120 to 190 °C, more preferably 125 to 188 °C, even more preferably 130 to 185 °C, and particularly preferably 130 to 170 °C. In addition, the glass transition temperature of the PAEK resin is preferably 145 °C or higher.

The above glass transition temperature can be adjusted by appropriately selecting the ratio of the repeating unit (1-1) to the repeating unit (2-1), for example,.

Note that the glass transition temperature can be measured by using the method described in the Examples section below.

The melting point (Tm) of the PAEK resin of the present disclosure is preferably 250 °C to 400 °C, more preferably 260 °C to 390 °C, and even more preferably 270 °C to 390 °C. The melting point (Tm) of the PAEK resin of present embodiment is preferably 300 °C or higher, and more preferably from 300 to 380 °C.

The above melting point can be adjusted by appropriately selecting the ratio of the repeating unit (1-1) to the repeating unit (2-1), for example.

Note that the melting point can be measured by the method described in the Examples section below.

The degree of crystallinity of the PAEK resin of the present embodiment is preferably 15 to 50%, more preferably 18 to 48%, and even more preferably 20 to 46%.

The above degree of crystallinity can be adjusted by appropriately selecting the ratio of the repeating unit (1-1) to the repeating unit (2-1), for example.

Note that the degree of crystallinity can be measured by using the method described in the Examples section below.

(Method of producing polyarylene ether ketone resin (PEAK resin))

A method of producing the PAEK resin of the present embodiment is not limited as long as the above-mentioned PAEK resin of the present embodiment can be produced.

Of these, the method of producing the PAEK resin of the present embodiment is preferably a method (sometimes referred to as production method (I) in the present specification) causing a reaction of monomer components that include a monomer (1-2) represented by the following formula (1-2) and a monomer (3-1) represented by the following formula (3-1) and may further include a monomer (2-2) represented by the following formula (2-2), in the presence of a fluorine

atom-containing sulfonic acid represented by the following formula (4-1), and a fluorine atom-containing acetic anhydride represented by the following formula (5-1) or a fluorine atom-containing sulfonic anhydride represented by the following formula (6-1). Note that the above monomer component may include an oligomer component.

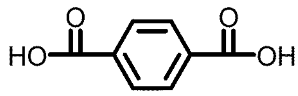

(1-2)

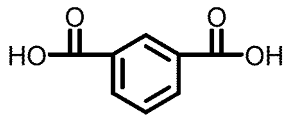

(2-2)

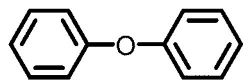

(3-1)

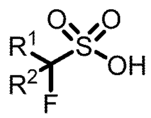

(4-1)

($R^1$ and $R^2$ in formula (4-1) can be the same or different from each other, and are a hydrogen atom, a fluorine atom, a trifluoromethyl group, a pentafluoroethyl group, or an alkyl group having a carbon number of 1 to 8 (preferably 1 to 4).)

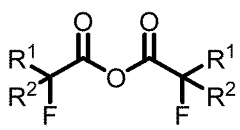

(5-1)

($R^1$ and $R^2$ in formula (5-1) can be the same or different from each other, and are a hydrogen atom, a fluorine atom, a trifluoromethyl group, a pentafluoroethyl group, or an alkyl group having a carbon number of 1 to 8 (preferably 1 to 4).)

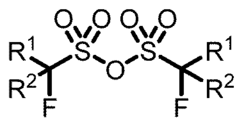

(6-1)

($R^1$ and $R^2$ in formula (6-1) can be the same or different from each other, and are a hydrogen atom, a fluorine atom, a trifluoromethyl group, a pentafluoroethyl group, or an alkyl group having a carbon number of 1 to 8 (preferably 1 to 4).)

In the present specification, a fluorine atom-containing sulfonic acid represented by formula (4-1) may be simply referred to as "fluorine atom-containing sulfonic acid. In addition, a fluorine atom-containing acetic anhydride represented by formula (5-1) may be simply referred to as "fluorine atom-containing acetic anhydride. Furthermore, a fluorine atom-containing sulfonic anhydride represented by formula (6-1) may be simply referred to as "fluorine atom-containing sulfonic anhydride.

The above production method (I) is preferably a Friedel-Crafts reaction type aromatic electrophilic substitution polycondensation reaction in a solution. The above aromatic electrophilic substitution polycondensation reaction enables the reaction to be carried out under relatively milder polymerization conditions than other polymerization conditions.

In the production method of the present embodiment, a PAEK resin can be produced by adding the above fluorine atom-containing sulfonic acid, and the above fluorine atom-containing acetic anhydride or the above fluorine atom-containing sulfonic anhydride to the above monomer components, raising the temperature, and stirring.

In the production method of the present embodiment, the reaction temperature of at stage (herein sometimes referred to as the reaction initiation stage) where a reaction of the above monomer components starts in the presence of the above fluorine atom-containing sulfonic acid, and the above fluorine atom-containing acetic anhydride or the above fluorine atom-containing sulfonic anhydride is preferably 20 to 80 °C. In particular, the temperature at the reaction initiation stage in combination of the above fluorine atom-containing sulfonic acid and the above fluorine atom-containing acetic anhydride is preferably 20 °C to 45 °C.

The reaction time at the temperature at the reaction initiation stage is preferably 1 to 10 hours, and the total reaction time is preferably 1.1 to 100 hours. In addition, the reaction time at the temperature at the reaction initiation stage is preferably shorter than the total reaction time. It is particularly preferable to charge the reagents into a single reaction vessel in a batch to cause the above reaction. However, the above fluorine atom-containing sulfonic acid, and the above fluorine atom-containing acetic anhydride or the above fluorine atom-containing sulfonic anhydride may be added sequentially in steps to the above monomer components, or the reaction can also be achieved by adding them in any order to a single reaction vessel. In addition, the sequence is not limited to the above order.

Examples of the fluorine atom-containing sulfonic acid include, for example, trifluoromethanesulfonic acid, nonafluorobutanesulfonic acid, heptadecafluorooctanesulfonic acid, and chlorodifluoromethanesulfonic acid. One of the above fluorine atom-containing sulfonic acids may be used alone, or some of them may be used in combinations.

Examples of the above fluorine atom-containing acetic anhydride include, for example, monofluoroacetic anhydride, difluoroacetic anhydride, trifluoroacetic anhydride, pentafluoropropionic anhydride, heptafluorobutyric anhydride, and chlorodifluoroacetic anhydride. One of the above fluorine atom-containing acetic anhydrides may be used alone, or some of them may be used in combinations.

Examples of the above fluorine atom-containing sulfonic anhydride include trifluoromethanesulfonic anhydride, nonafluorobutanesulfonic anhydride, heptadecafluorooctane sulfonic anhydride, and chlorodifluoromethanesulfonic anhydride, for example. One of the above fluorine atom-containing sulfonic anhydrides may be used alone, or some of them may be used in combinations.

The ratio of the amount of the above fluorine atom-containing sulfonic acid to the amount of the above fluorine atom-containing acetic anhydride or the above fluorine atom-containing sulfonic anhydride added, i.e., [the fluorine atom-containing sulfonic acid] : [the fluorine atom-containing acetic anhydride or the fluorine atom-containing sulfonic anhydride], is preferably in the range of 100:95 to 100:5, and more preferably in the range of 100:90 to 100:10, in terms of molar ratio.

The ratio of the total amount of the above fluorine atom-containing sulfonic acid, the above fluorine atom-containing acetic anhydride, and the above fluorine atom-containing sulfonic anhydride added, to the total amount of the monomer (1-2), the monomer (2-2), and the monomer (3-1) added, i.e., [the sum of the fluorine atom-containing sulfonic acid, the fluorine atom-containing acetic anhydride, and the fluorine atom-containing sulfonic anhydride] : [the sum of the monomer (1-2), the monomer (2-2), and the monomer (3-1)], is preferably in the range of 100:95 to 100:5, and more preferably in the range of 100:90 to 100:10, in terms of molar ratio. The ratio of the amount of the above fluorine atom-containing sulfonic acid added to the total amount of the monomer (1-2), the monomer (2-2), and the monomer (3-1) added, i.e., [the fluorine atom-containing sulfonic acid] : [the sum of the monomer (1-2), the monomer (2-2), and the monomer (3-1)], is preferably in the range of 100:90 to 100:5, and more preferably in the range of 100:80 to 100:20, in terms of molar ratio.

Unlike the method by adding the above fluorine atom-containing sulfonic acid, and the above fluorine atom-containing acetic anhydride or the above fluorine atom-containing sulfonic anhydride to the above monomer components to cause the reaction, in the case in which the reaction is carried out using an organic sulfonic acid such as methane sulfonic acid or ethane sulfonic acid instead of the above fluorine atom-containing sulfonic acid, the monomer (1-2), the monomer (2-2), and polymers consisting of the repeating unit (1-1) and polymers consisting of the repeating unit (2-1) formed in the reaction precipitate and the reaction stops because of their low solubilities. This results in generation of a PAEK resin having a GPC-based number average molecular weight Mn of less than 4,000, which tends to reduce the mechanical properties of the resin when it is molded.

In the case where the above fluorine atom-containing sulfonic acid and one organic sulfonic acid alone or two or more organic sulfonic acids mixed together are used, the decrease in GPC-based number average molecular weight Mn is improved and a PAEK resin with Mn of 4,000 or more can be obtained. In this case, the ratio of the amount of the above fluorine atom-containing sulfonic acid and the total amount of the organic sulfonic acids added, i.e., [the fluorine atom-containing sulfonic acid] : [the sum of organic sulfonic acids], is preferably in the range of 100:100 to 100:10, and more preferably in the range of 100:90 to 100:5, in terms of molar ratio. The number average molecular weight Mn of the resultant PAEK resin is preferably 4,000 or more, more preferably 4,000 to 30,000, even more preferably 4,000 to 25,000, even more preferably 4,000 to 20,000, and particularly preferably 4,500 to 15,000. The above average molecular weight is preferably 8,000 or more. Examples of the organic sulfonic acids include methane sulfonic acid, ethane sulfonic acid, propane sulfonic acid, butane sulfonic acid, benzene sulfonic acid, and p-toluenesulfonic acid. One or two of the above fluorine atom-containing sulfonic acids may used alone or in combination, and one or two of the above organic

sulfonic acids may used alone or in combination.

In the above method wherein the above fluorine atom-containing sulfonic acid (or a mixture of a fluorine atom-containing sulfonic acid and an organic sulfonic acid), and the above fluorine atom-containing acetic anhydride or the above fluorine atom-containing sulfonic anhydride are added to the above monomer components and cause a reaction, when the temperature at the reaction initiation stage is higher than 30 °C, the resultant polymer is less likely to have a lower solubility and is less likely to precipitate, and the reaction is less likely to stop in the midst thereof. Therefore, a PAEK resin with a high GPC-based number average molecular weight Mn (e.g., 4,000 or more, preferably 8,000 or more) can be obtained, and an excellent mechanical properties can be achieved when mold processed.

In the above production method (I), an oligomer component may be added in addition to the above monomer components. As the above oligomer component, an oligomer containing a repeating unit represented by the formula (1-1) or a repeating unit represented by the formula (1-2) is preferred, an oligomer represented by the following general formula (8-1), an oligomer represented by the following general formula (8-2), an oligomer represented by the following general formula (8-3), or an oligomer represented by the following general formula (8-4) is more preferred. One or more of the above oligomer components may be used alone, or some of them may be used in combination.

Also, in the above production method (I), for example, production can be achieved by a reaction of the monomer (1-2), the monomer (3-1), and an oligomer represented by the following general formula (8-1) and/or an oligomer represented by the following general formula (8-2) in the presence of the above fluorine atom-containing sulfonic acid, and the above fluorine atom-containing acetic anhydride or the above fluorine atom-containing sulfonic anhydride.

Alternatively, production can also be achieved by a reaction of the monomer (1-2), the monomer (3-1), and an oligomer represented by the following general formula (8-3) and/or an oligomer represented by the following general formula (8-4) in the presence of the above fluorine atom-containing sulfonic acid, and the above fluorine atom-containing acetic anhydride or the above fluorine atom-containing sulfonic anhydride.

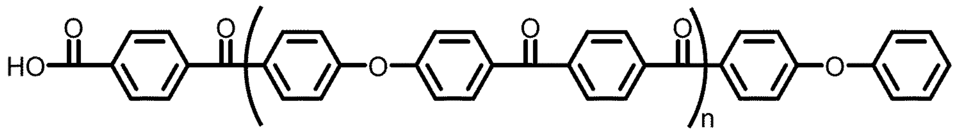

(8-1)

(In the formula, n is an integer of 0 to 5).

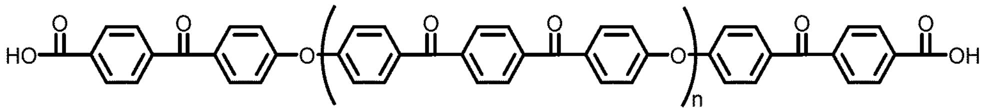

(8-2)

(In the formula, n is an integer of 0 to 5).

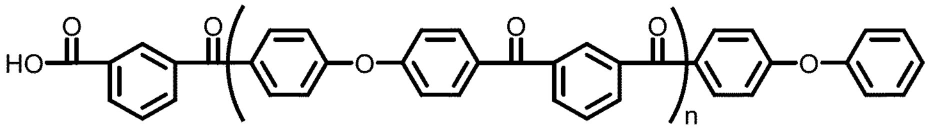

(8-3)

(In the formula, n is an integer of 0 to 5).

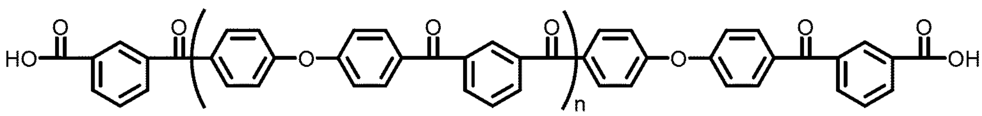

(8-4)

(In the formula, n is an integer of 0 to 5).

The production method using an oligomer component is also preferably a Friedel-Crafts reaction-type aromatic electrophilic substitution polycondensation reaction in a solution. The above aromatic electrophilic substitution polycondensation reaction enables the reaction to be carried out under relatively mild polymerization conditions.

Specifically, a PAEK resin can be produced through a reaction of the above monomer components, and an oligomer represented by the general formula (8-1), an oligomer represented by the general formula (8-2), an oligomer represented by the following general formula (8-3), and/or an oligomer represented by the following general formula (8-4), in the presence of the above fluorine atom-containing sulfonic acid, and the above fluorine atom-containing acetic anhydride or the above fluorine atom-containing sulfonic anhydride, and raising the temperature and stirring.

The temperature at the reaction initiation stage in the presence of the above fluorine atom-containing sulfonic acid, and the above fluorine atom-containing acetic anhydride or the above fluorine atom-containing sulfonic anhydride is preferably 20 to 80 °C. In particular, the temperature at the reaction initiation stage in combination of the above fluorine atom-containing sulfonic acid and the above fluorine atom-containing acetic anhydride is preferably 20 °C to 45 °C.

The reaction time at the temperature at the reaction initiation stage is preferably 1 to 10 hours, and the total reaction time is preferably 1.1 to 100 hours. In addition, the reaction time at the temperature at the reaction initiation stage is preferably shorter than the total reaction time. It is particularly preferable to charge the reagents into a single reaction vessel in a batch to cause the above reaction. However, the above fluorine atom-containing sulfonic acid, and the above fluorine atom-containing acetic anhydride or the above fluorine atom-containing sulfonic anhydride may be added sequentially in steps to the above monomer components, or the reaction can also be achieved by adding them in any order to a single reaction vessel. In addition, the sequence is not limited to the above order.

Unlike the method by adding the above fluorine atom-containing sulfonic acid, and the above fluorine atom-containing acetic anhydride or the above fluorine atom-containing sulfonic anhydride to a mixture of the above monomer (1-2), the above monomer (2-2), the above monomer (3-1), and the oligomer represented by the above general formula (8-1) and/or the oligomer represented by the above general formula (8-2) to cause the reaction, in the case in which the reaction is carried out using an organic sulfonic acid such as methanesulfonic acid or ethanesulfonic acid alone instead of the above fluorine-atom containing sulfonic acid, the monomer (2-2), the oligomer (8-1), the oligomer (8-2), polymers consisting of the repeating unit (1-1), and polymers consisting of the repeating unit (2-1) precipitate and the reaction stops because of their low solubilities. This results in a PAEK resin having a GPC-based number average molecular weight Mn of less than 4,000, which tends to reduce the mechanical properties of the resin when it is molded.

Unlike the method by adding the above fluorine atom-containing sulfonic acid, and the above fluorine atom-containing acetic anhydride or the above fluorine atom-containing sulfonic anhydride to a mixture of the above monomer (1-2), the above monomer (2-2), the above monomer (3-1), and the oligomer represented by the above general formula (8-3) and/or the oligomer represented by the above general formula (8-4) to cause the reaction, in the case in which the reaction is carried out using an organic sulfonic acid such as methanesulfonic acid or ethanesulfonic acid alone, the monomer (1-2), the oligomer (8-3), the oligomer (8-4), polymers consisting of the repeating unit (1-1), and polymers consisting of the repeating unit (2-1) precipitate and the reaction stops because of their low solubilities. This results in a PAEK resin having a GPC-based number average molecular weight Mn of less than 4,000, which tends to reduce the mechanical properties of the resin when it is molded.

In the case where the above fluorine atom-containing sulfonic acid and one organic sulfonic acid alone or two or more organic sulfonic acids mixed together are used, the decrease in GPC-based number average molecular weight Mn is improved and a PAEK resin with Mn of 4,000 or more can be obtained. In this case, the ratio of the amount of the above fluorine atom-containing sulfonic acid and the total amount of the organic sulfonic acids added, i.e., [the fluorine atom-containing sulfonic acid] : [the sum of organic sulfonic acids], is preferably in the range of 100:100 to 100:5, and more preferably in the range of 100:90 to 100:10, in terms of molar ratio. The number average molecular weight Mn of the resultant PAEK resin is preferably 4,000 or more, more preferably 4,000 to 30,000, even more preferably 4,000 to 25,000, even more preferably 4,000 to 20,000, and particularly preferably 4,500 to 15,000. The above average molecular weight is preferably 8,000 or more.

A production method of oligomers represented by the above formulae (8-1) to (8-4) preferably includes preparing by reacting monomer components which include a monomer (1-2) represented by (1-2) and a monomer (3-1) represented by the following formula (3-1) and may further include a monomer (2-2) represented by the following formula (2-2), in the presence of a fluorine atom-containing acetic anhydride represented by the following formula (4-1), and a fluorine atom-containing sulfonic acid represented by the following formula (5-1) or a fluorine atom-containing sulfonic anhydride represented by the following formula (6-1).

(Composition containing polyarylene ether ketone resin (PAEK resin))

A composition of the present embodiment includes the above-mentioned PAEK resin of the present embodiment.

The composition of the present embodiment may further include an additive. Examples of the above additive include 2,4,8,10-tetra (tert-butyl)-6-hydroxy-12H-dibenzo [d,g][1,3,2]dioxaphosphocin 6-oxide sodium salt (CAS No.: 85209-91-2), tetrakis(2,4-di-tert-butylphenyl) [1,1'-biphenyl]-4,4'-diylbisphosphonite (119345-01-6), but the present disclosure is not limited only to these.

The mass ratio of the above-mentioned PAEK resin of the present embodiment per 100 % by mass of the

composition of the present embodiment is preferably 50% or more, more preferably 70% or more, even more preferably 80 % by mass or more, and particularly preferably 90 % by mass or more.

(Molded product containing polyarylene ether ketone resin (PAEK resin))

The PAEK resin of the present embodiment is excellent in metal adhesion. Furthermore, it preferably has an excellent heat resistance, a high glass transition temperature (Tg), enables adjustment of the melting point (Tm) while retaining a high crystallinity, and has good molding processability.

In addition to use as neat resin, the PAEK resin of the present embodiment can be used as a composite material through compounding with glass fibers, carbon fibers, cellulose fibers, a fluororesin, or the like.

The PAEK resin of the present embodiment can be mold processed into primary products such as pellets, films, rods, boards, and filaments, and secondary products such as gears, composites, implants, and 3D-printed molded products, for example, via various injection molded or machined products.

Applications of the molded product containing the PAEK resin of the present embodiment are not particularly limited. Because the contents of metal elements such as aluminum and iron, which are not originally included in the components of the PAEK resin, and the contents of phosphorus elements, phosphate ions ($PO_4^{3-}$), and unneeded elements such as chlorine are low, the PAEK resin can be used not only in automobiles and aircrafts, which are conventional applications for molded products of PEAK resins, but also in electrical and electronic materials in which the contents of elements are restricted, and in medical components for which health and safety considerations are particularly highly required.

EXAMPLES

The present disclosure will be described below in further details with reference to examples, but the scope of the present disclosure is not limited to these examples.

(Evaluations)

[Glass transition temperature (Tg) and crystal melting point (Tm)]

Measurements were carried out on PAEK resins obtained in examples and comparative examples using a DSC apparatus (DSC3500) manufactured by NETZSCH. In an aluminum pan, 5 mg of the sample which had not been subjected to any special heat treatment after polymerization was measured out. Condition program was used so that a measurement was carried out while the temperature was increased from 50 °C to 400 °C at a temperature increase condition of 20 °C/min under a nitrogen flow at 20 mL/min, and the temperature was lowered from 400 °C to 50 °C under a temperature decrease condition of 10 °C/min. Unless otherwise stated, the glass transition temperature (Tg) and the crystal melting point (Tm) were determined as the temperatures of the inflection point of the glass transition point and the peak top of the melting point peak, respectively, detected in the second program cycle after start of the measurement under the above temperature increase condition.

[Degree of crystallinity]

For each of the PAEK resins obtained in the examples and the comparative examples, 5 mg of the sample which had not been subjected to any special heat treatment after polymerization was measured out in an aluminum pan. Using a DSC apparatus (DSC3500) manufactured by NETZSCH, a measurement was carried out while the temperature was increased from 50 °C to 400 °C at a temperature increase condition of 20 °C/min under a nitrogen flow at 20 mL/min, was lowered to 50 °C under a temperature decrease condition of 5 °C/min, and was then increased from 50 °C to 400 °C under a temperature increase condition of 20 °C/min to determine the melting calorie, and the degree of crystallinity was calculated by the following formula.

$$\text{Degree of crystallinity (\%)} = \Delta\text{Hm} / \Delta\text{Hc} \times 100$$

where ΔHm is the melting calorie of the sample PAEK resin, and 130 J/g which is the melting calorie of a perfect crystal of a PEEK resin was used as ΔHc.

[Measurement of molecular weight distribution]

Measurements were carried out on the PAEK resins obtained in the examples and the comparative examples using a GPC system (HPLC8320) manufactured by Tosoh Corporation, HLC-83220GPC EcoSEC System Control Version 1.14 as instrument control software, an RI detector equipped by standard with the system as the detector, and hexafluoroisopropanol containing 0.4 % by mass of sodium trifluoroacetate dissolved in an eluent. Methyl polymethacrylate (PMMA) was used as the standard material. Results were analyzed using HLC-83220GPC EcoSEC Data Analysis Version 1.15. The baseline was drawn from the rising baseline to the falling baseline of a chromatographic peak, and the number average molecular weight (Mn), the weight average molecular weight (Mw), and the molecular weight distribution (Mw/Mn) were calculated from the obtained peaks through conversions based on a PMMA calibration curve of the standard material.

[Elemental analysis]

About 0.1 g of the PAEK resin sample obtained in each of the examples and the comparative examples were precisely weighed out in a decomposition vessel made of tetrafluoromethoxyl (TFM), and pressurized acid decomposition was performed by adding sulfuric acid and nitric acid in a microwave decomposition apparatus. The resulting decomposed solution was adjusted to a volume to 50 mL, which was subjected to an ICP-MS measurement. The ICP-MS measurement was performed using an instrument (Agilent 7900) manufactured by Agilent Technology to quantify elements classified into Period 2 to Period 6 among the Group 3 to Group 13 elements in the periodic table excluding Tc (technetium) and Pm (promethium) of which no stable isotopes exist. Furthermore, chlorine and bromine elements were quantified using an ion chromatograph (ICS-1500) manufactured by Dionex.

[Quantification of residual phosphate ion ($PO_4^{3-}$)]

About 1 g of powder of each of the PAEK resin samples obtained in the examples and the comparative examples described below was precisely weighed out and extractions were carried out with each of water and ethanol using a Soxhlet extractor for 24 hours. The extract was concentrated using an evaporator and vacuum dried at 100 °C for 6 hours. An ion chromatograph (Model 10) manufactured by Dionex was used, and a pre-column packed with a low exchange capacity anion exchange resin, a separation column, and a removal column packed with a high exchange capacity ion exchange resin, which are manufactured by the same company, were connected. Data processing was performed using Sigma10 lab data system manufactured by Perkin-Elmer, which was connected to the system. All reagents were special grade products and were used as they were. The sample was injected through the sampling loop as an eluent solution. The eluent used was 0.003 M sodium bicarbonate - 0.0024 M sodium carbonate (pH 10.3), and the residue obtained through the Soxhlet extraction described above was dissolved and analyzed. The retention time of the peak top derived from phosphate ion under this condition was observed from 10.0 to 11.5 minutes. A quantification was performed based on the value of the peak area between the rising baseline and falling baseline of the chromatographic peak obtained in this analysis.

[Evaluation on metal adhesion]

Each of the PAEK resins in the examples and the comparative examples described below was molten under nitrogen at a temperature equal to (the crystalline melting point determined by the DSC measurement + 20 °C). The resin was then joined with a smooth plate made of SUS 304 by means of insert molding. A tensile shear test in accordance with ISO 19095 was performed on the SUS 304-PAEK resin specimen, and the adhesion was evaluated from the shear strength obtained in the test. In addition, a tensile shear test according to JIS K6850 was carried out, and the adhesion was also evaluated from the ratio of the weight of the PAEK resin that remained adhered in the joint portion of the SUS 304-PAEK resin after the shear test (residual resin weight), to the weight of the PAEK resin joined (total weight of the joined resin).

[Quantification of the numbers of ketone groups and ether groups in PAEK resin by NMR]

Each of the PAEK resins obtained in the examples and the comparative examples described below was dissolved in HFIP-$d_2$, and a measurement was carried out using an NMR system (ECZ-500) manufactured by JEOL Ltd. using $^{13}C$ as the observation nucleus, a waiting time of 5 seconds, a measurement temperature of 25 °C, and a total number of integrations of 250,000 times. The number of ketone groups and the number of ether groups in the repeating units in the polymer were calculated from the sum of the integral values derived from the ketone group carbon and half the sum of the integral values derived from the ether group ipso carbon, respectively, to the sum of the integral values derived

from carbon in all repeating units in the resin. The chemical shift of HFIP-$d_2$ (68.95 ppm) was used as the standard to identify chemical shifts, and the signals derived from the ketone group carbon and the signals derived from the ether group ipso aromatic ring carbon were each separately confirmed to be signals derived from the quaternary carbon that disappeared at dept 135 °. For each quantification, a calculation was made based on the signals observed at 195 to 205 ppm and 155 to 165 ppm.

Or, the PAEK resin was dissolved in pentafluorophenol at 40 °C. A fine tube containing HFIP-$d_2$ was introduced as the internal standard, and a measurement was carried out using ECZ-500, $^{13}C$ as the observed nucleus, a waiting time of 5 seconds, a measurement temperature of 40 °C, and a total number of integrations of 250,000 times. The number of ketone groups and the number of ether groups in the repeating units in the polymer were calculated from the sum of the integral values derived from the ketone group carbon and two third of the sum of the integral values derived from the ether group ipso carbon, respectively, to the sum of the integral values derived from carbon in repeating units. The chemical shift of HFIP-$d_2$ (68.95 ppm) was used as the standard to identify chemical shifts, and the signals derived from the ketone group carbon and the signals derived from the ether group ipso aromatic ring carbon were each separately confirmed to be signals derived from the quaternary carbon that disappear at dept 135°. For each quantification, a calculation was made based on the signals observed at 195 to 205 ppm and 155 to 165 ppm.

(Example 1)

In a four-necked separable flask equipped with a nitrogen inlet tube, a thermometer, a reflux cooling tube, and a stirrer, 100 g of terephthalic acid, 103 g of diphenyl ether, 339 g of trifluoromethanesulfonic acid, and 315 g of trifluoroacetic anhydride were charged. The reaction solution was heated to 35° C under nitrogen atmosphere, and was stirred for 6 hours. The reaction solution was then heated to 60 °C, and was stirred for 6 hours. After being cooled to room temperature, the reaction solution was poured into a 1-N solution of sodium hydroxide under strong stirring to cause a polymer to precipitate, and the polymer was filtrated. The filtrated polymer was then washed twice with distilled water and washed twice with ethanol. Thereafter, the polymer was dried for 8 hours at 150 °C under vacuum. The molecular weight distribution was determined with GPC, and Mn was 10,400, Mw was 58,200, and Mw/Mn was 5.6, and it was confirmed that a PAEK resin according to Example 1 was produced.

In addition, the glass transition temperature (Tg), the crystal melting point (Tm), and the degree of crystallinity of the PAEK resin according to Example 1 were measured. The results are summarized in Table 1.

(Example 2)

In a four-necked separable flask equipped with a nitrogen inlet tube, a thermometer, a reflux cooling tube, and a stirrer, 90 g of terephthalic acid, 10 g of isophthalic acid, 103 g of diphenyl ether, 339 g of trifluoromethanesulfonic acid, and 315 g of trifluoroacetic anhydride were charged. The reaction solution was heated to 35° C under nitrogen atmosphere, and was stirred for 6 hours. The reaction solution was then heated to 60 °C, and was stirred for 6 hours. After being cooled to room temperature, the reaction solution was poured into a 1-N solution of sodium hydroxide under strong stirring to cause a polymer to precipitate, and the polymer was filtrated. The filtrated polymer was then washed twice with distilled water and washed twice with ethanol. Thereafter, the polymer was dried for 8 hours at 150 °C under vacuum. The molecular weight distribution was determined with GPC, and Mn was 10,000, Mw was 40,400, and Mw/Mn was 4.0, and it was confirmed that a PAEK resin according to Example 2 was produced.

In addition, the glass transition temperature (Tg), the crystal melting point (Tm), and the degree of crystallinity of the PAEK resin according to Example 2 were measured. The results are summarized in Table 1.

(Example 3)

In a four-necked separable flask equipped with a nitrogen inlet tube, a thermometer, a reflux cooling tube, and a stirrer, 80 g of terephthalic acid, 20 g of isophthalic acid, 103 g of diphenyl ether, 339 g of trifluoromethanesulfonic acid, and 315 g of trifluoroacetic anhydride were charged. The reaction solution was heated to 35° C under nitrogen atmosphere, and was stirred for 6 hours. The reaction solution was then heated to 60 °C, and was stirred for 6 hours. After being cooled to room temperature, the reaction solution was poured into a 1-N solution of sodium hydroxide under strong stirring to cause a polymer to precipitate, and the polymer was filtrated. The filtrated polymer was then washed twice with distilled water and washed twice with ethanol. Thereafter, the polymer was dried for 8 hours at 150 °C under vacuum. The molecular weight distribution was determined with GPC, and Mn was 10,000, Mw was 38,400, and Mw/Mn was 3.8, and it was confirmed that a PAEK resin according to Example 3 was produced.

In addition, the glass transition temperature (Tg), the crystal melting point (Tm), and the degree of crystallinity of the PAEK resin according to Example 3 were measured. The results are summarized in Table 1.

(Example 4)

In a four-necked separable flask equipped with a nitrogen inlet tube, a thermometer, a reflux cooling tube, and a stirrer, 70 g of terephthalic acid, 30 g of isophthalic acid, 103 g of diphenyl ether, 339 g of trifluoromethanesulfonic acid, and 315 g of trifluoroacetic anhydride were charged. The reaction solution was heated to 35° C under nitrogen atmosphere, and was stirred for 6 hours. The reaction solution was then heated to 60 °C, and was stirred for 6 hours. After being cooled to room temperature, the reaction solution was poured into a 1-N solution of sodium hydroxide under strong stirring to cause a polymer to precipitate, and the polymer was filtrated. The filtrated polymer was then washed twice with distilled water and washed twice with ethanol. Thereafter, the polymer was dried for 8 hours at 150 °C under vacuum. The molecular weight distribution was determined with GPC, and Mn was 10,000, Mw was 31,400, and Mw/Mn was 3.1, and it was confirmed that a PAEK resin according to Example 4 was produced.
In addition, the glass transition temperature (Tg), the crystal melting point (Tm), and the degree of crystallinity of the PAEK resin according to Example 4 were measured. The results are summarized in Table 1.

(Example 5)

In a four-necked separable flask equipped with a nitrogen inlet tube, a thermometer, a reflux cooling tube, and a stirrer, 50 g of terephthalic acid, 50 g of isophthalic acid, 103 g of diphenyl ether, 339 g of trifluoromethanesulfonic acid, and 315 g of trifluoroacetic anhydride were charged. The reaction solution was heated to 35° C under nitrogen atmosphere, and was stirred for 6 hours. The reaction solution was then heated to 60 °C, and was stirred for 6 hours. After being cooled to room temperature, the reaction solution was poured into a 1-N solution of sodium hydroxide under strong stirring to cause a polymer to precipitate, and the polymer was filtrated. The filtrated polymer was then washed twice with distilled water and washed twice with ethanol. Thereafter, the polymer was dried for 8 hours at 150 °C under vacuum. The molecular weight distribution was determined with GPC, and Mn was 10,100, Mw was 30,900, and Mw/Mn was 3.1, and it was confirmed that a PAEK resin according to Example 5 was produced.
In addition, the glass transition temperature (Tg), the crystal melting point (Tm), and the degree of crystallinity of the PAEK resin according to Example 5 were measured. The results are summarized in Table 1.

(Example 6)

In a four-necked separable flask equipped with a nitrogen inlet tube, a thermometer, a reflux cooling tube, and a stirrer, 90 g of terephthalic acid, 37 g of an oligomer (n = 1) of the general formula (7-1), 92 g of diphenyl ether, 339 g of trifluoromethanesulfonic acid, and 315 g of trifluoroacetic anhydride were charged. The reaction solution was heated to 35° C under nitrogen atmosphere, and was stirred for 6 hours. The reaction solution was then heated to 60 °C, and was stirred for 6 hours. After being cooled to room temperature, the reaction solution was poured into a 1-N solution of sodium hydroxide under strong stirring to cause a polymer to precipitate, and the polymer was filtrated. The filtrated polymer was then washed twice with distilled water and washed twice with ethanol. Thereafter, the polymer was dried for 8 hours at 150 °C under vacuum. The molecular weight distribution was determined with GPC, and Mn was 10,000, Mw was 38,400, and Mw/Mn was 3.8, and it was confirmed that a PAEK resin according to Example 6 was produced.
In addition, the glass transition temperature (Tg), the crystal melting point (Tm), and the degree of crystallinity of the PAEK resin according to Example 6 were measured. The results are summarized in Table 1.

(Example 7)

In a four-necked separable flask equipped with a nitrogen inlet tube, a thermometer, a reflux cooling tube, and a stirrer, 100 g of terephthalic acid, 103 g of diphenyl ether, 339 g of trifluoromethanesulfonic acid, and 315 g of trifluoroacetic anhydride were charged. The reaction solution was heated to 30° C under nitrogen atmosphere, and was stirred for 24 hours. The reaction solution was then cooled to room temperature and poured into a 1-N solution of sodium hydroxide under strong stirring to cause a polymer to precipitate, and the polymer was filtrated. The filtrated polymer was then washed twice with distilled water and washed twice with ethanol. Thereafter, the polymer was dried for 8 hours at 150 °C under vacuum. The molecular weight distribution was determined with GPC, and Mn was 5,400, Mw was 19,400, and Mw/Mn was 3.6, and it was confirmed that a PAEK resin according to Example 7 was produced.
In addition, the glass transition temperature (Tg), the crystal melting point (Tm), and the degree of crystallinity of the PAEK resin according to Example 7 were measured. The results are summarized in Table 1.

(Example 8)

In a four-necked separable flask equipped with a nitrogen inlet tube, a thermometer, a reflux cooling tube, and

a stirrer, 100 g of terephthalic acid, 103 g of diphenyl ether, 339 g of trifluoromethanesulfonic acid, and 315 g of trifluoroacetic anhydride were charged. The reaction solution was heated to 50° C under nitrogen atmosphere, and was stirred for 12 hours. The reaction solution was then cooled to room temperature and poured into a 1-N solution of sodium hydroxide under strong stirring to cause a polymer to precipitate, and the polymer was filtrated. The filtrated polymer was then washed twice with distilled water and washed twice with ethanol. Thereafter, the polymer was dried for 8 hours at 150 °C under vacuum. The molecular weight distribution was determined with GPC, and Mn was 4,800, Mw was 16,000, and Mw/Mn was 3.3, and it was confirmed that a PAEK resin according to Example 8 was produced.

In addition, the glass transition temperature (Tg), the crystal melting point (Tm), and the degree of crystallinity of the PAEK resin according to Example 8 were measured. The results are summarized in Table 1.

(Example 9)

In a four-necked separable flask equipped with a nitrogen inlet tube, a thermometer, a reflux cooling tube, and a stirrer, 100 g of terephthalic acid, 103 g of diphenyl ether, 2886 g of trifluoromethanesulfonic acid, and 315 g of trifluoroacetic anhydride were charged. The reaction solution was heated to 35° C under nitrogen atmosphere, and was stirred for 6 hours. The reaction solution was then heated to 60 °C, and was stirred for 6 hours. Then, after being cooled to room temperature, the reaction solution was poured into a 1-N solution of sodium hydroxide under strong stirring to cause a polymer to precipitate, and the polymer was filtrated. The filtrated polymer was then washed twice with distilled water and washed twice with ethanol. Thereafter, the polymer was dried for 8 hours at 150 °C under vacuum. The molecular weight distribution was determined with GPC, and Mn was 4,700, Mw was 15,800, and Mw/Mn was 3.4, and it was confirmed that a PAEK resin according to Example 9 was produced.

In addition, the glass transition temperature (Tg), the crystal melting point (Tm), and the degree of crystallinity of the PAEK resin according to Example 9 were measured. The results are summarized in Table 1.

(Example 10)

In a four-necked separable flask equipped with a nitrogen inlet tube, a thermometer, a reflux cooling tube, and a stirrer, 100 g of terephthalic acid, 103 g of diphenyl ether, 271 g of trifluoromethanesulfonic acid, and 357 g of trifluoromethanesulfonic anhydride were charged. The reaction solution was heated to 35° C under nitrogen atmosphere, and was stirred for 6 hours. The reaction solution was then heated to 60 °C, and was stirred for 6 hours. After being cooled to room temperature, the reaction solution was poured into a 1-N solution of sodium hydroxide under strong stirring to cause a polymer to precipitate, and the polymer was filtrated. The filtrated polymer was then washed twice with distilled water and washed twice with ethanol. Thereafter, the polymer was dried for 8 hours at 150 °C under vacuum. The molecular weight distribution was determined with GPC, and Mn was 4,600, Mw was 15,640, and Mw/Mn was 3.4, and it was confirmed that a PAEK resin according to Example 10 was produced.

In addition, the glass transition temperature (Tg), the crystal melting point (Tm), and the degree of crystallinity of the PAEK resin according to Example 10 were measured. The results are summarized in Table 1.

(Comparative Example 1)

[Polymerization example using diphosphorus pentaoxide]

In a four-necked separable flask equipped with a nitrogen inlet tube, a thermometer, a reflux cooling tube, and a stirrer, 1915 g of trifluoromethanesulfonic acid and 100 g of terephthalic acid were charged. The reaction solution was stirred at room temperature under nitrogen atmosphere for 20 hours. To this, 103 g of diphenyl ether and 205 g of diphosphorus pentaoxide were charged into the flask under stirring. The mixture was heated to 100 °C, and was then stirred for 4 hours. After being cooled to room temperature, the reaction solution was poured into a 1-N solution of sodium hydroxide under strong stirring to cause a polymer to precipitate, and the polymer was filtrated. The filtrated polymer was then washed twice with distilled water and washed twice with ethanol. Thereafter, the polymer was dried for 8 hours at 150 °C under vacuum. The molecular weight distribution was determined with GPC, and Mn was 10,400, Mw was 41,600, and Mw/Mn was 4.0, and it was confirmed that a PAEK resin according to Comparative Example 1 was produced.

In addition, the glass transition temperature (Tg), the crystal melting point (Tm), and the degree of crystallinity of the PAEK resin according to Comparative Example 1 were measured. The results are summarized in Table 2.

(Comparative Example 2)

[Polymerization example using acid chloride monomer and aluminum chloride anhydrous catalyst]

In a four-necked separable flask equipped with a nitrogen inlet tube, a thermometer, a reflux cooling tube, and a stirrer, 122 g of terephthalic acid dichloride, 103 g of diphenyl ether, and 525 g of o-dichlorobenzene were charged. While the temperature was kept to 5 °C or lower under nitrogen atmosphere, 204 g of aluminum trichloride anhydrous was added and the mixture was stirred at 0 °C for 30 minutes. Then, 2000 g of o-dichlorobenzene was added, and the mixture was stirred at 130 °C for 1 hour and cooled to room temperature. The supernatant was then removed by decantation. The remaining reaction suspension was poured into a 1-N solution of sodium hydroxide under strong stirring to cause a polymer to precipitate, and the polymer was filtrated. The filtrated polymer was then washed twice with distilled water and washed twice with ethanol. Thereafter, the polymer was dried for 8 hours at 150 °C under vacuum. The molecular weight distribution was determined with GPC, and Mn was 8,000, Mw was 28,400, and Mw/Mn was 3.6, and it was confirmed that a PAEK resin according to Comparative Example 3 was produced.

In addition, the glass transition temperature (Tg), the crystal melting point (Tm), and the degree of crystallinity of the PAEK resin according to Comparative Example 2 were measured. The results are summarized in Table 2.

(Comparative Example 3)

[Polymerization example using acid chloride monomer and aluminum chloride anhydrous catalyst]

In a four-necked separable flask equipped with a nitrogen inlet tube, a thermometer, a reflux cooling tube, and a stirrer, 85 g of terephthalic acid dichloride, 37 g of isophthalic acid dichloride, 103 g of diphenyl ether, and 525 g of o-dichlorobenzene were charged. While the temperature was kept to 5 °C or lower under nitrogen atmosphere, 204 g of aluminum trichloride anhydrous was added and the mixture was stirred at 0 °C for 30 minutes. Then, 2000 g of o-dichlorobenzene was added, and the mixture was stirred at 130 °C for 1 hour and cooled to room temperature. The supernatant was then removed by decantation. The remaining reaction suspension was poured into a 1-N solution of sodium hydroxide under strong stirring to cause a polymer to precipitate, and the polymer was filtrated. The filtrated polymer was then washed twice with distilled water and washed twice with ethanol. Thereafter, the polymer was dried for 8 hours at 150 °C under vacuum. The molecular weight distribution was determined with GPC, and Mn was 8,700, Mw was 28,400, and Mw/Mn was 3.3, and it was confirmed that a PAEK resin according to Comparative Example 3 was produced.

In addition, the glass transition temperature (Tg), the crystal melting point (Tm), and the degree of crystallinity of the PAEK resin according to Comparative Example 3 were measured. The results are summarized in Table 2.

(Comparative Example 4)

PEKK manufactured by Goodfellow was used a PEKK resin according to Comparative Example 4. The molecular weight distribution was measurement with GPC, and the glass transition temperature (Tg), the crystal melting point (°C), the degree of crystallinity, and the like were measured. The results are summarized in Table 2.

(Comparative Example 5)

PEEK manufactured by Aldrich was used a PEEK resin according to Comparative Example 5. The molecular weight distribution was measurement with GPC, and the glass transition temperature (Tg), the crystal melting point (°C), the degree of crystallinity, and the like were measured. The results are summarized in Table 2.

(Comparative Example 6)

[Polymerization example using biphenyl instead of diphenyl ether]

In a four-necked separable flask equipped with a nitrogen inlet tube, a thermometer, a reflux cooling tube, and a stirrer, 100 g of terephthalic acid, 92.4 g of biphenyl, 339 g of trifluoromethanesulfonic acid, and 315 g of trifluoroacetic anhydride were charged. The reaction solution was heated to 35° C under nitrogen atmosphere, and was stirred for 6 hours. The reaction solution was then heated to 60 °C, and was stirred for 6 hours. After being cooled to room temperature, the reaction solution was poured into a 1-N solution of sodium hydroxide under strong stirring to cause a polymer to precipitate, and the polymer was filtrated. The filtrated polymer was then washed twice with distilled water and washed twice with ethanol. Thereafter, the polymer was dried for 8 hours at 150 °C under vacuum. The molecular weight

distribution was determined with GPC, and Mn was 9,400, Mw was 50,200, and Mw/Mn was 5.3, and it was confirmed that a PAEK resin according to Comparative Example 6 was produced.

In addition, the glass transition temperature (Tg), the crystal melting point (Tm), and the degree of crystallinity of the PAEK resin according to Comparative Example 6 were measured. The results are summarized in Table 2.

(Comparative Example 7)

[Polymerization example using 1,4-diphenoxybenzene instead of diphenyl ether]

In a four-necked separable flask equipped with a nitrogen inlet tube, a thermometer, a reflux cooling tube, and a stirrer, 100 g of terephthalic acid, 157 g of 1,4-diphenoxybenzene, 339 g of trifluoromethanesulfonic acid, and 315 g of trifluoroacetic anhydride were charged. The reaction solution was heated to 35 °C under nitrogen atmosphere, and was stirred for 6 hours. The reaction solution was then heated to 60 °C, and was stirred for 6 hours. After being cooled to room temperature, the reaction solution was poured into a 1-N solution of sodium hydroxide under strong stirring to cause a polymer to precipitate, and the polymer was filtrated. The filtrated polymer was then washed twice with distilled water and washed twice with ethanol. Thereafter, the polymer was dried for 8 hours at 150 °C under vacuum. The molecular weight distribution was determined with GPC, and Mn was 10,400, Mw was 51,200, and Mw/Mn was 4.9, and it was confirmed that a PAEK resin according to Comparative Example 7 was produced.

In addition, the glass transition temperature (Tg), the crystal melting point (Tm), and the degree of crystallinity of the PAEK resin according to Comparative Example 7 were measured. The results are summarized in Table 2.

(Comparative Example 8)

[Polymerization example intended to decrease average molecular weight Mn]

In a four-necked separable flask equipped with a nitrogen inlet tube, a thermometer, a reflux cooling tube, and a stirrer, 1915 g of trifluoromethanesulfonic acid and 100 g of terephthalic acid were charged. The reaction solution was stirred at room temperature under nitrogen atmosphere for 20 hours. To this, 103 g of diphenyl ether and 205 g of diphosphorus pentaoxide were charged into the flask under stirring. The mixture was heated to 100 °C, and was then stirred for 1 hour. After being cooled to room temperature, the reaction solution was poured into a 1-N solution of sodium hydroxide under strong stirring to cause a polymer to precipitate, and the polymer was filtrated. The filtrated polymer was then washed twice with distilled water and washed twice with ethanol. Thereafter, the polymer was dried for 8 hours at 150 °C under vacuum. The molecular weight distribution was determined with GPC, and Mn was 5,000, Mw was 15,600, and Mw/Mn was 3.1, and it was confirmed that a PAEK resin according to Comparative Example 8 was produced.

In addition, the glass transition temperature (Tg), the crystal melting point (Tm), and the degree of crystallinity of the PAEK resin according to Comparative Example 8 were measured. The results are summarized in Table 2. The result of the elemental analysis of this sample indicated detection of 1100 ppm of phosphorus element, and 1500 ppm of phosphate ion was detected in the analysis on residual phosphate ion ($PO_4^{3-}$) .

(Comparative Example 9)

In a four-necked separable flask equipped with a nitrogen inlet tube, a thermometer, a reflux cooling tube, and a stirrer, 100 g of terephthalic acid and 103 g of diphenyl ether were charged. Under a nitrogen atmosphere, 1000 g of trifluoromethanesulfonic anhydride was added, and after stirring at 60 °C for 30 minutes, 192.3 g of trifluoromethanesulfonic acid was added and the mixture was stirred for 6 hours while the temperature was maintained. After being cooled to room temperature, the reaction solution was poured into a 1-N solution of sodium hydroxide under strong stirring to cause a polymer to precipitate, and the polymer was filtrated. The filtrated polymer was then washed twice with distilled water and washed twice with ethanol. Thereafter, the polymer was dried for 8 hours at 150 °C under vacuum. The molecular weight distribution was determined with GPC, and the differential molecular weight distribution indicated a curve giving bimodal peaks separated by the baseline. It conformed from analyses of the peaks that Mn was 2,280 and 396, Mw was 2,400 and 492, and Mw/Mn was 1.1 and 1.2, respectively, and it was confirmed that a PAEK resin according to Comparative Example 9 was produced.

In addition, the glass transition temperature (Tg), the crystal melting point (Tm), and the degree of crystallinity of the PAEK resin according to Comparative Example 9 were measured. The results are summarized in Table 2.

[Values of elemental analyses and values of residual phosphate ion analyses]

The results of the elemental analyses and the residual phosphate ion analyses for the PAEK resins in Examples

1 to 10 and Comparative Examples 1 to 4, 8, and 9 are summarized in Table 3. In the PAEK resins in Examples 1 to 10, the residual amounts of all elements classified into Period 2 to Period 6 among the Group 3 to Group 13 elements in the periodic table excluding Tc (technetium) and Pm (promethium) of which no stable isotopes exist, as well as the residual amounts of Cl, Br, and P, and the residual amount of phosphate ion were all 100 ppm or less.

[Results of evaluations of metal adhesion]

The metal adhesion of the PAEK resins in Examples 1 to 10 and Comparative Examples 1 to 9 was evaluated, i.e., the adhesion was evaluated based on the tensile shear strengths. The results are summarized in Tables 4 and 5.

[Results of quantifications of the numbers of ketone and ether groups in PAEK resin by NMR]

The quantitative values of ketone groups and ether groups relative to the total carbon number in the repeating units in the polymer determined by the NMR measurements on the PAEK resins in Examples 1 to 10 and Comparative Examples 1 to 9 are summarized in Tables 4 and 5.

The PAEK resins in Examples 1 to 10 were prepared such that the glass transition temperatures (Tg) were adjusted to 130 to 170 °C and the crystal melting points (Tm) were adjusted to 300 to 390 °C as summarized in Table 1, and they were resins having excellent heat resistance comparable to commercially available PAEK resins (Comparative Examples 4 and 5 in Table 2).

As summarized in Table 3, it is also understood that the PAEK resins in Examples 1 to 10 contained almost no unneeded elements such as Al, Cl, and P, which have been an issue in the conventional production methods of PAEK resins through aromatic electrophilic substitution type polycondensation reactions. It is also understood that the crystal melting point (Tm) was lower and the moldability was better than those of Comparative Examples 1 to 4, which had the similar ratio of terephthaloyl skeletons and isophthaloyl skeletons.

In particular, it is understood that the tensile shear strengths of the PAEK resins in Examples 1 to 6 were better than those of Comparative Examples 1 to 4, and the values thereof were higher than that of the PEEK resin in Comparative Example 5. These results may be attributable to the crystalline melting points of the PAEK resins in Examples 1 to 4 which were lower than those of Comparative Examples 1 to 4 having the similar repeating compositions, which contributed to the improved shear stress of the resins per se.

Furthermore, in evaluations of the adhesion between the PAEK resin and the metal based on the tensile shear strengths, it was understood that the adhesions of the PAEK resins in Examples 1 to 4 were superior to those of Comparative Examples 1 to 4 having the similar repeating compositions, and were better than that of Comparative Example 5. It is also understood that the ratios of the weight of the PAEK resin that remained adhered in the joint portion of the SUS 304-PAEK resin after the shear test in Examples 1 to 6 were higher than those of Comparative Examples 1 to 7. These results confirm that the PAEK resins in Examples 1 to 6 had a greater number of ketone groups in the repeating unit than that of the PEEK resin of Comparative Example 5, which contributed an increased number of polar functional groups, thereby increasing the weight of the PAEK resin that remained adhered in the joint portion of the SUS 304-PAEK resin after the shear test, which improved adhesion to the metal.

On the other hand, it is understood that the shear strengths and the metal adhesions of the PAEK resins in Examples 7 to 10 were lower than those of the PAEK resins in Examples 1 to 6. These results may reflect the fact that the PAEK resins in Examples 7 to 10 became brittle due to lower average molecular weights Mn than those of the PAEK resins in Examples 1 to 6.

Furthermore, it is understood that the PAEK resins in Examples 1 to 10 had higher ratios of the weight of the PAEK resin that remained adhered in the joint portion of the SUS 304-PAEK resin after the shear test than Comparative Examples 6 and 7. The result of Comparative Example 6 is considered to be attributable to the fact that the number of ketone groups in the repeating unit was similar to those in Examples 1 to 9, but lack of an ether group resulted in lower adhesion to the metal due to the reduced number of polar functional groups. In the results of Comparative Example 7, even though the sum of the number of ketone groups and the number of ether groups in the repeating unit was similar, the metal adhesion was reduced. Based on these facts, a ketone group content of 9.5% by mol or more and an ether group content of 4.5% by mol or more are required in the repeating unit for achieving a good metal adhesion.

Examples 7 to 10 were superior to Comparative Example 8 which had conditions in similar levels other than unneeded elements and the residual phosphate ion content, because of the higher shear strengths and the higher ratios of the weight of the PAEK resin that remained adhered in the joint portion of the SUS 304-PAEK resin after the shear test, which imparts excellent effects.

Examples 7 to 10 were superior to Comparative Example 9 which had the similar values of the analyses of residual elements and had a lower number average molecular weight Mn, because of the higher shear strengths and the higher ratios of the weight of the PAEK resin that remained adhered in the joint portion of the SUS 304-PAEK resin after the shear test, which imparts excellent effects.

[Table 1]

| | | Unit | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Composition | Repeating unit (1-1) | %by mol | 100 | 90 | 80 | 70 | 50 | 100 | 100 | 100 | 100 | 100 |
| | Repeating unit (2-1) | %by mol | 0 | 10 | 20 | 30 | 50 | 0 | 0 | 0 | 0 | 0 |
| Reaction conditions | (1-2) | g | 100 | 90 | 80 | 70 | 50 | 90 | 100 | 100 | 100 | 100 |
| | (2-2) | g | 0 | 10 | 20 | 30 | 50 | 0 | 0 | 0 | 0 | 0 |
| | (3-1) | g | 103 | 103 | 103 | 103 | 103 | 92 | 103 | 103 | 103 | 103 |
| | (7-1) n=1 | g | 0 | 0 | 0 | 0 | 0 | 37 | 0 | 0 | 0 | 0 |
| | (4-1) $R^1$, $R^2$ = F | g | 339 | 339 | 339 | 339 | 339 | 339 | 339 | 339 | 2886 | 271 |
| | (5-1) $R^1$, $R^2$ = F | g | 315 | 315 | 315 | 315 | 315 | 315 | 315 | 315 | 315 | 0 |
| | (6- 1) $R^1$, $R^2$ = F | g | 0 | 0 | 0 | 0 | 0 | 0 | 0 | 0 | 0 | 357 |
| | First reaction temperature | °C | 35 | 35 | 35 | 35 | 35 | 35 | 30 | 50 | 35 | 35 |
| | Second reaction temperature | °C | 60 | 60 | 60 | 60 | 60 | 60 | - | - | 60 | 60 |
| | First reaction time | hr | 6 | 6 | 6 | 6 | 6 | 6 | 24 | 12 | 6 | 6 |
| | Second reaction time | hr | 6 | 6 | 6 | 6 | 6 | 6 | - | - | 6 | 6 |
| Analytical values | Tg | °C | 169 | 165 | 160 | 154 | 148 | 168 | 160 | 159 | 159 | 158 |
| | Tm | °C | 386 | 360 | 340 | 317 | 301 | 389 | 370 | 370 | 369 | 385 |
| | Degree of crystallinity | % | 33 | 31 | 29 | 27 | 20 | 34 | 29 | 28 | 28 | 31 |
| | Mn | - | 10400 | 10000 | 10000 | 10000 | 10100 | 10000 | 5400 | 4800 | 4700 | 4600 |

[Table 2]

| | | Unit | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Comp. Ex. 9 |
|---|---|---|---|---|---|---|---|---|---|---|---|
| Composition | Repeating unit (1-1) | % by mol | 100 | 100 | 70 | 70 | - | - | - | 100 | 100 |
| | Repeating unit (2-1) | % by mol | 0 | 0 | 30 | 30 | - | - | - | 0 | 0 |
| Analytical values | Tg | °C | 169 | 165 | 162 | 163 | 149 | 169 | 159 | 168 | 160 |
| | Tm | °C | 395 | 402 | 334 | 331 | 342 | 390 | 330 | 394 | 365 |
| | Degree of crystallinity | % | 36 | 38 | 23 | 24 | 28 | 36 | 30 | 36 | 20 |
| | Mn | - | 10400 | 8000 | 8700 | 8700 | - | 9400 | 10400 | 5000 | 2280, 396 |

[Table 3-1]

| | Values of elemental analyses | | | | | | | | | | | | | | | | | | | | | | | | |
|---|---|---|---|---|---|---|---|---|---|---|---|---|---|---|---|---|---|---|---|---|---|---|---|---|---|
| | B | Al | Sc | Ti | V | Cr | Mn | Fe | Co | Ni | Cu | Zn | ga | Y | Zr | Nb | Mo | Ru | Rh | Pd | Ag | Cd | In | La | Ce |
| Unit | ppm | ppm | ppm | ppm | ppm | ppm | ppm | ppm | ppm | ppm | ppm | ppm | ppm | ppm | ppm | ppm | ppm | ppm | ppm | ppm | ppm | ppm | ppm | ppm | ppm |
| Example 1 | < 1 | < 1 | < 0.1 | < 2 | < 5 | < 0.1 | < 0.1 | < 1 | < 0.1 | < 0.1 | < 0.1 | < 0.2 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 |
| Example 2 | < 1 | < 1 | < 0.1 | < 2 | < 5 | < 0.1 | < 0.1 | < 1 | < 0.1 | < 0.1 | < 0.1 | < 0.2 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 |
| Example 3 | < 1 | < 1 | < 0.1 | < 2 | < 5 | < 0.1 | < 0.1 | < 1 | < 0.1 | < 0.1 | < 0.1 | < 0.2 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 |
| Example 4 | < 1 | < 1 | < 0.1 | < 2 | < 5 | < 0.1 | < 0.1 | < 1 | < 0.1 | < 0.1 | < 0.1 | < 0.2 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 |
| Example 5 | < 1 | < 1 | < 0.1 | < 2 | < 5 | < 0.1 | < 0.1 | < 1 | < 0.1 | < 0.1 | < 0.1 | < 0.2 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 |
| Example 6 | < 1 | < 1 | < 0.1 | < 2 | < 5 | < 0.1 | < 0.1 | < 1 | < 0.1 | < 0.1 | < 0.1 | < 0.2 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 |
| Example 7 | < 1 | < 1 | < 0.1 | < 2 | < 5 | < 0.1 | < 0.1 | < 1 | < 0.1 | < 0.1 | < 0.1 | < 0.2 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 |
| Example 8 | < 1 | < 1 | < 0.1 | < 2 | < 5 | < 0.1 | < 0.1 | < 1 | < 0.1 | < 0.1 | < 0.1 | < 0.2 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 |
| Example 9 | < 1 | < 1 | < 0.1 | < 2 | < 5 | < 0.1 | < 0.1 | < 1 | < 0.1 | < 0.1 | < 0.1 | < 0.2 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 |
| Example 10 | < 1 | < 1 | < 0.1 | < 2 | < 5 | < 0.1 | < 0.1 | < 1 | < 0.1 | < 0.1 | < 0.1 | < 0.2 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 |
| Comp. Ex. 1 | < 1 | < 1 | < 0.1 | < 2 | < 5 | 0.5 | < 0.1 | 1 | < 0.1 | 0.5 | < 0.1 | 0.3 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 |
| Comp. Ex. 2 | < 1 | 190 | < 0.1 | < 2 | < 5 | 0.4 | < 0.1 | 2 | < 0.1 | 0.5 | < 0.1 | 0.3 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 |
| Comp. Ex. 3 | < 1 | 190 | < 0.1 | < 2 | < 5 | 0.6 | < 0.1 | 2 | < 0.1 | 0.6 | < 0.1 | 0.4 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 |
| Comp. Ex. 4 | < 1 | 200 | < 0.1 | < 2 | < 5 | 0.4 | < 0.1 | 2 | < 0.1 | 0.5 | < 0.1 | 0.3 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 |
| Comp. Ex. 8 | < 1 | < 1 | < 0.1 | < 2 | < 5 | 0.5 | < 0.1 | 1 | < 0.1 | 0.5 | < 0.1 | 0.3 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 |
| Comp. Ex. 9 | < 1 | < 1 | < 0.1 | < 2 | < 5 | < 0.1 | < 0.1 | < 1 | < 0.1 | < 0.1 | < 0.1 | < 0.2 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 |

[Table 3-2]

| | Values of elemental analyses | | | | | | | | | | | | | | | | | | | | | | | | | Residual phosphate ion analysis |
|---|---|---|---|---|---|---|---|---|---|---|---|---|---|---|---|---|---|---|---|---|---|---|---|---|---|---|
| | Pr | Nd | Sm | Eu | gd | Tb | Dy | Ho | Er | Tm | Yb | Lu | Hf | Ta | W | Re | Os | Ir | Pt | Au | Hg | Tl | P | Cl | Br | Phosphate ion ($PO_4^{3-}$) |
| Unit | ppm | ppm | ppm | ppm | ppm | ppm | ppm | ppm | ppm | ppm | ppm | ppm | ppm | ppm | ppm | ppm | ppm | ppm | ppm | ppm | ppm | ppm | ppm | ppm | ppm | ppm |
| Example 1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 1 | < 1 | < 20 | < 1 |
| Example 2 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 1 | < 1 | < 20 | < 1 |
| Example 3 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 1 | < 1 | < 20 | < 1 |
| Example 4 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 1 | < 1 | < 20 | < 1 |
| Example 5 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 1 | < 1 | < 20 | < 1 |
| Example 6 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 1 | < 1 | < 20 | < 1 |
| Example 7 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 1 | < 1 | < 20 | < 1 |
| Example 8 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 1 | < 1 | < 20 | < 1 |
| Example 9 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 1 | < 1 | < 20 | < 1 |
| Example 10 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 1 | < 1 | < 20 | < 1 |
| Comp. Ex. 1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | 1000 | < 1 | < 20 | 1500 |
| Comp. Ex. 2 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 1 | 4200 | < 20 | < 1 |
| Comp. Ex. 3 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 1 | 4100 | < 20 | < 1 |
| Comp. Ex. 4 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | 720 | 4100 | < 20 | 500 |
| Comp. Ex. 8 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | 1100 | < 1 | < 20 | 1500 |
| Comp. Ex. 9 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 0.1 | < 1 | < 1 | < 20 | < 1 |

[Table 4]

| | Tensile shear strength | Weight of residual resin / total weight of joined resin | Number of ketone groups in repeating unit | Number of ether groups in repeating unit |
|---|---|---|---|---|
| | MPa | % by weight | % by mol | % by mol |
| Example 1 | 40 | 85 | 9.9 | 5.0 |
| Example 2 | 41 | 84 | 9.5 | 4.6 |
| Example 3 | 42 | 82 | 9.5 | 4.5 |
| Example 4 | 45 | 80 | 9.5 | 4.8 |
| Example 5 | 41 | 80 | 9.8 | 4.5 |
| Example 6 | 41 | 85 | 9.6 | 4.5 |
| Comp. Ex. 1 | 35 | 70 | 9.9 | 4.5 |
| Comp. Ex. 2 | 35 | 70 | 10.0 | 4.9 |
| Comp. Ex. 3 | 37 | 72 | 9.9 | 5.0 |
| Comp. Ex. 4 | 37 | 72 | 9.9 | 5.0 |
| Comp. Ex. 5 | 36 | 50 | 5.3 | 10.5 |
| Comp. Ex. 6 | 30 | 30 | 9.5 | 0.0 |
| Comp. Ex. 7 | 30 | 25 | 7.7 | 7.7 |

[Table 5]

| | Tensile shear strength | Weight of residual resin / total weight of joined resin | Number of ketone groups in repeating unit | Number of ether groups in repeating unit |
|---|---|---|---|---|
| | MPa | % by weight | % by mol | % by mol |
| Example 7 | 31 | 62 | 9.5 | 4.6 |
| Example 8 | 31 | 61 | 9.5 | 4.5 |
| Example 9 | 31 | 60 | 9.5 | 4.8 |
| Example 10 | 31 | 60 | 9.5 | 4.8 |

(continued)

| | Tensile shear strength | Weight of residual resin / total weight of joined resin | Number of ketone groups in repeating unit | Number of ether groups in repeating unit |
|---|---|---|---|---|
| | MPa | % by weight | % by mol | % by mol |
| Comp. Ex. 8 | 25 | 50 | 9.5 | 4.7 |
| Comp. Ex. 9 | 18 | 20 | 9.5 | 4.7 |

## Claims

**1.** A polyarylene ether ketone resin,

wherein the following (A) to (D) are satisfied:

(A) a residual amount of each element classified into Period 2 to Period 6 among the Group 3 to Group 13 elements in the periodic table excluding Tc (technetium) and Pm (promethium) of which no stable isotopes exist is 100 ppm or less;
(B) a residual amount of each of Cl and Br elements is 100 ppm or less;
(C) a residual amount of P is 100 ppm or less; and
(D) a repeating unit (1-1) represented by the following general formula (1-1) is included, and a repeating unit (2-1) represented by the following general formula (2-1) may be further included, and

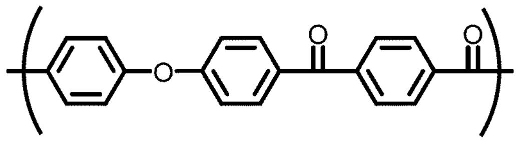

(1-1)

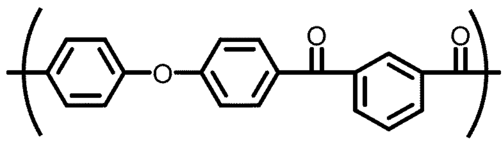

(2-1)

a molar ratio of ketone groups in all repeating units included in the resin and a molar ratio of ether groups in the all repeating units, to a total carbon number in the all repeating units, are 9.5% by mol or more and 4.5% by mol or more, respectively.

**2.** A polyarylene ether ketone resin,

wherein the following (A), (B), (C'), and (D) are satisfied:

(A) a residual amount of each element classified into Period 2 to Period 6 among the Group 3 to Group 13 elements in the periodic table excluding Tc (technetium) and Pm (promethium) of which no stable isotopes exist is 100 ppm or less;
(B) a residual amount of each of Cl and Br elements is 100 ppm or less;
(C') a residual amount of phosphate ion ($PO_4^{3-}$) is 100 ppm or less; and
(D) a repeating unit (1-1) represented by the following general formula (1-1) is included, and a repeating unit (2-1) represented by the following general formula (2-1) may be further included, and

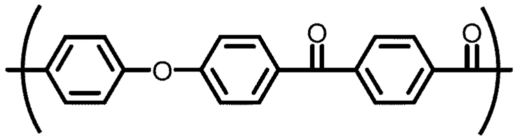

(1-1)

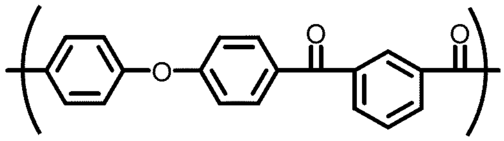

(2-1)

a molar ratio of ketone groups in all repeating units included in the resin and a molar ratio of ether groups in the all repeating units, to a total carbon number in the all repeating units, are 9.5% by mol or more and 4.5% by mol or more, respectively.

**3.** The polyarylene ether ketone resin according to claim 1 or 2, wherein a ratio of the repeating unit (1-1) to the repeating unit (2-1) (repeating unit (1-1) : repeating unit (2-1)) is in a range of 100:0 to 50:50 in terms of molar ratio, and a GPC-based number average molecular weight Mn is 4,000 or more.

**4.** The polyarylene ether ketone resin according to any one of claims 1 to 3, wherein a glass transition temperature is 145 °C or higher and a melting point is 300 °C or higher.

**5.** A method of producing the polyarylene ether ketone resin according to any one of claims 1 to 4, the method comprising: causing a reaction of monomer components that comprise a monomer (1-2) represented by the following formula (1-2) and a monomer (3-1) represented by the following formula (3-1) and may further comprise a monomer (2-2) represented by the following formula (2-2), in the presence of a fluorine atom-containing sulfonic acid represented by the following general formula (4-1), and a fluorine atom-containing acetic anhydride represented by the following general formula (5-1) or a fluorine atom-containing sulfonic anhydride represented by the following general formula (6-1):

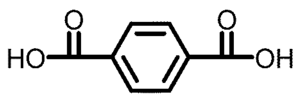

(1-2)

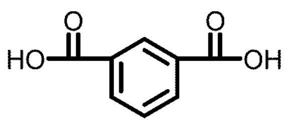

(2-2)

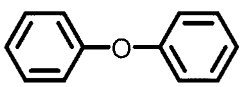

(3-1)

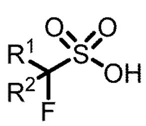

(4-1)

(in the formula, $R^1$ and $R^2$ can be the same or different from each other, and are a hydrogen atom, a fluorine atom, a trifluoromethyl group, a pentafluoroethyl group, or an alkyl group having a carbon number of 1 to 8),

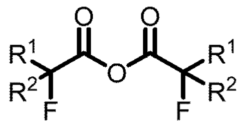

(5-1)

(in the formula, $R^1$ and $R^2$ can be the same or different from each other, and are a hydrogen atom, a fluorine atom, a trifluoromethyl group, a pentafluoroethyl group, or an alkyl group having a carbon number of 1 to 8),

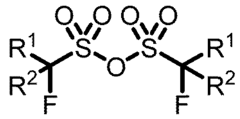

(6-1)

(in the formula, $R^1$ and $R^2$ can be the same or different from each other, and are a hydrogen atom, a fluorine atom, a trifluoromethyl group, a pentafluoroethyl group, or an alkyl group having a carbon number of 1 to 8).

**6.** A composition comprising the polyarylene ether ketone resin according to any one of claims 1 to 5.

**7.** A molded product comprising the polyarylene ether ketone resin according to any one of claims 1 to 6.

## INTERNATIONAL SEARCH REPORT

International application No.
**PCT/JP2021/032186**

**A. CLASSIFICATION OF SUBJECT MATTER**

***C08G 67/00***(2006.01)i
FI: C08G67/00

According to International Patent Classification (IPC) or to both national classification and IPC

**B. FIELDS SEARCHED**

Minimum documentation searched (classification system followed by classification symbols)

C08G65/00-67/04

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2020-502325 A (SOLVAY SPECIALTY POLYMERS USA, LLC) 23 January 2020 (2020-01-23)<br>claims 1-15, paragraphs [0005], [0013], [0030], examples 10-16 | 1-4, 6-7<br>5 |
| X<br>A | JP 2020-502337 A (SOLVAY SPECIALTY POLYMERS USA, LLC) 23 January 2020 (2020-01-23)<br>claims 1-15, paragraphs [0005], [0012], [0026], example 16 | 1-4, 6-7<br>5 |
| A | JP 2004-526859 A (VICTREX MANUFACTURING LIMITED) 02 September 2004 (2004-09-02)<br>claims 1-29, paragraph [0055], examples | 1-7 |
| A | JP 58-208320 A (IMPERIAL CHEMICAL INDUSTRIES PLC) 05 December 1983 (1983-12-05)<br>claims, examples | 1-7 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 November 2021** | **16 November 2021** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No. **PCT/JP2021/032186**

**C. DOCUMENTS CONSIDERED TO BE RELEVANT**

| Category* | Citation of document, with indication, where appropriate, of the relevant passages | Relevant to claim No. |
|---|---|---|
| A | RISSE, Wilhelm et al. The preparation of poly(aryl ether ketones) by the use of trifluoromethanesulfonic acid, Makromolekulare Chemie. Macromolecular Symposia., 1991, vol. 44, pp. 185-193 in particular, pp. 186-188, table 1 | 1-7 |
| P, X | JP 2020-143262 A (TORAY INDUSTRIES) 10 September 2020 (2020-09-10) claims 1-9, paragraphs [0009], [0040]-[0041], [0045], example 1 | 1-7 |

Form PCT/ISA/210 (second sheet) (January 2015)

**INTERNATIONAL SEARCH REPORT**
**Information on patent family members**

International application No.
**PCT/JP2021/032186**

| Patent document cited in search report | Publication date (day/month/year) | Patent family member(s) | Publication date (day/month/year) |
|---|---|---|---|
| JP 2020-502325 A | 23 January 2020 | US 2020/0115499 A1<br>claims 16-21, paragraphs [0005], [0013], [0031], examples 10-16<br>WO 2018/115033 A1<br>EP 3559085 A1<br>CN 110312752 A | |
| JP 2020-502337 A | 23 January 2020 | US 2020/0087455 A1<br>claims 1-15, paragraphs [0005], [0012], [0025], example 16<br>WO 2018/115035 A1<br>EP 3559084 A1<br>CN 110248984 A | |
| JP 2004-526859 A | 02 September 2004 | US 2005/0004340 A1<br>claims 1-41, paragraph [0078], examples<br>WO 2002/096974 A2<br>EP 1392753 A2<br>CN 1513013 A<br>CN 1715308 A<br>KR 10-2004-0011515 A | |
| JP 58-208320 A | 05 December 1983 | GB 2116990 A<br>claims 1-16, examples | |
| JP 2020-143262 A | 10 September 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP S54090296 A
- US 3065205 A
- US 4611033 A
- JP H3505751 A
- JP S59135224 A

### Non-patent literature cited in the description


- *The Journal of Toxicological Sciences,* 2015, vol. 40 (1), 55-69
- *JOURNAL of ENVIRONMENTAL CONSERVATION ENGINEERING,* 1982, vol. 11 (11), 44-51
- *Material cycles and waste management research,* 2018, vol. 29 (2), 152-162
- *JOURNAL OF THE SOCIETY OF RUBBER SCIENCE AND TECHNOLOGY, JAPAN,* 2014, vol. 87 (11), 441-446